# EUROPEAN PATENT APPLICATION

(11) **EP 4 832 268 A1**
(43) Date of publication of application: **28.10.2026**
(21) Application number: 26172115.3
(22) Date of filing: 14.04.2026
(51) Int. Cl.: H01S 3/1112, H01S 3/063, H01S 3/16, H01S 3/17

(54) **PHOTONIC INTEGRATED CIRCUIT MODE-LOCKED LASER AND METHOD OF PROVIDING OPTICAL PULSES**

(30) Priority: 22.04.2025 EP 25171755; 04.09.2025 EP 25200343
(71) Applicant: ECOLE POLYTECHNIQUE FEDERALE DE LAUSANNE (EPFL), 1015 Lausanne (CH)
(72) Inventor: QIU, Zheru, 1023 CRISSIER (CH); YANG, Xuan, 1022 Chavannes-près-Renens (CH); KIPPENBERG, Tobias, 1025 St-Sulpice (CH)
(74) Representative: Byrne, Declan

(57) **Abstract**

Photonic integrated circuit mode-locked laser including a first reflector, a second reflector, and at least one waveguide extending between the first and second reflectors and forming at least one optical cavity between the first and second reflectors. The first and second reflectors, the at least one waveguide and the at least one optical cavity form a Mamyshev oscillator architecture or a linear cavity Mamyshev oscillator architecture.

## Description

### CROSS-REFERENCE TO RELATED APPLICATIONS

The present patent application claims priority to European Patent Application EP25171755.9 that was filed on April 22nd 2025 and to European Patent Application EP 25200343.9 that was filed on September 4th, 2025.

### FIELD OF THE INVENTION

The present invention concerns a laser, and more particularly concerns a photonic integrated circuit laser or a photonic integrated circuit mode-locked laser. The present invention concerns a photonic integrated Mamyshev oscillator, photonic integrated Mamyshev oscillator laser, or a high-energy mode-locked photonic integrated Mamyshev oscillator. The present invention also concerns a method of providing or generating optical pulses, mode-locked pulses or high-energy mode-locked pulses from a photonic integrated circuit mode-locked laser or a photonic integrated circuit Mamyshev oscillator.

### BACKGROUND

Mode-locked lasers (MLLs), capable of generating ultrashort coherent pulses, have been instrumental for numerous applications, including optical frequency metrology, eye surgery, machining, additive manufacturing, imaging and spectroscopy. However, commercial table-top MLLs typically composed of discrete components, remain bulky and costly, prompting ongoing efforts toward miniaturization. Photonic integrated circuit based mode-locked lasers, could unlock fully integrated optical atomic clocks, provided that intense low-repetition-rate pulses - essential for octave-spanning, self-referenced frequency combs - could be generated. Yet, existing photonic integrated chip-scale MLLs based on semiconductor saturable absorbers and actively mode-locked lasers are limited in peak power, pulse energy, spectral coverage, and coherence. To date, their performance are far from the "gold standard" of fiber or solid-state mode-locked lasers.

Mode-locked lasers (MLLs) are laser sources that emit intense, ultrashort optical pulses. Since their inception, MLLs have become essential tools across numerous fields, enabling advances in material processing, metrology, biological imaging, ophthalmology, femtochemistry, and optical spectroscopy.

Recently, significant efforts have been devoted to developing ultrafast pulse sources on photonic integrated circuits (PICs), aiming to replicate table-top laser performance within a compact footprint and allowing for integration of additional functionalities. Mode-locking of integrated III-V semiconductor lasers has been demonstrated both monolithically and through heterogeneous integration with silicon or lithium niobate photonics, leveraging saturable absorption in semiconductors or radio-frequency modulation.

Using external semiconductor saturable absorber mirrors, mode-locking has also been achieved in low-confinement erbium-doped planar lightwave circuits. Alternatively, Kerr microcombs and electro-optic frequency combs were also shown to generate femtosecond pulses on chip.

However, all existing PIC-based ultrafast sources still fall far short of the performance of table-top MLLs performance, in terms of noise, peak power, pulse duration, and pulse energy. In particular, pulse energies in existing works remain at the few-picojoule level, limiting their ability to drive on-chip nonlinear processes such as super-continuum generation, a cornerstone for self-referenced, phase-coherent links between optical and radio frequencies.

Recent advances in high-confinement doped waveguides offer a promising route to scaling up laser pulse energy. Demonstrations of high-power optical amplifiers in erbium-ion-implanted silicon nitride (Er:Si₃N₄), thulium-doped aluminum oxide (Tm:Al₂O₃), and titanium-doped sapphire waveguides highlight their potential as efficient gain media for MLLs. These low-loss doped waveguides support submeter-long laser cavities within compact chips, enabling repetition rates of a few hundred megahertz. Yet, stable mode-locking has not been attained in these active waveguides, with prior demonstrations limited to Q-switched operation.

A goal of the present invention is to provide an improved optical pulse emitting laser that address the above-mentioned inconveniences and/or inconveniences of known optical pulse emitting laser devices.

### SUMMARY

It is therefore one aspect of the present disclosure to provide an integrated laser, integrated circuit laser or photonic integrated circuit laser that addresses one or more of the above-mentioned inconveniences.

The photonic integrated circuit mode-locked laser may include a first reflector, a second reflector, and at least one waveguide extending between the first and second reflectors and forming at least one optical cavity between the first and second reflectors.

The at least one waveguide may include at least one rare-earth ion implanted section located between the first and second reflectors.

The first and second reflectors, the at least one waveguide and the at least one optical cavity form a Mamyshev oscillator architecture or a linear cavity Mamyshev oscillator architecture.

The photonic integrated circuit mode-locked laser may include at least one first reflector; at least one second reflector; and at least one optical waveguide extending between the at least one first reflector and the at least one second reflector, the at least one optical waveguide forming at least one optical cavity between the at least one first reflector and the at least one second reflector. The at least one optical waveguide may be configured to amplify light propagating in the at least one optical cavity in an amplification wavelength range of the at least one optical waveguide. The at least one first reflector may be configured to at least partially reflect light in a first wavelength band into the at least one optical waveguide for light amplification and may be configured for propagation towards the at least one second reflector. The at least one second reflector may be configured to at least partially reflect light in a second wavelength band into the at least one optical waveguide for light amplification and for propagation towards the at least one first reflector. The second wavelength band may be at least partially offset in wavelength from the first wavelength band by a wavelength offset. To generate at least one mode-locked laser pulse, the at least one optical waveguide may be configured to simultaneously (i) amplify light in the at least one optical cavity at least in the wavelength offset between the first and second wavelength bands, and (ii) generate self-phase modulation of at least one optical pulse propagating in the at least one optical waveguide to spectrally extend a spectrum of the at least one optical pulse at least in the wavelength offset between the first and second wavelength bands.

According to an aspect, the at least one first and second reflectors, the at least one optical waveguide, and the at least one optical cavity may be supported by at least one photonic integrated circuit supporting substrate; and the at least one first and second reflectors, the at least one optical waveguide, and the at least one optical cavity may form a linear optical cavity Mamyshev oscillator architecture for generating and outputting mode-locked laser pulses.

According to another aspect, the first wavelength band may have a first central wavelength, and the second wavelength band has a second central wavelength, and the wavelength offset may be defined and/or extend between the first and second central wavelengths.

According to another aspect, the at least one first reflector may be configured to output the at least one mode-locked laser pulse and be configured to transmit light at an optical pump wavelength λp to transfer optical pump light to at least one optical gain medium of the at least one optical waveguide to generate excited optical states in the at least one optical gain medium; and the at least one second reflector may be configured to output the at least one mode-locked laser pulse and be configured to transmit light at the optical pump wavelength λp to transfer the optical pump light to the at least one optical gain medium to generate excited optical states in the at least one optical gain medium.

According to another aspect, the at least one first reflector may comprise and/or be formed by a first waveguide Bragg grating, and the at least one second reflector may comprise or be formed by a second waveguide Bragg grating, and the at least one optical waveguide may extend between the first and second waveguide Bragg gratings and form the at least one optical cavity between the first and second waveguide Bragg gratings.

According to another aspect, the at least one optical waveguide may be configured to provide and/or generate self-phase modulation-induced spectral broadening of the at least one optical pulse across the wavelength offset to bridge the wavelength gap to enable lasing.

According to another aspect, the at least one optical waveguide may be a nonlinear optical waveguide.

According to another aspect, the at least one first reflector may be or comprise at least one apodized waveguide Bragg grating configured to provide a pass-band reflection for circulating optical pulses within the at least one optical cavity while transmitting light at an optical pump light wavelength λp.

According to another aspect, the at least one second reflector may be or comprise at least one apodized waveguide Bragg grating configured to provide a pass-band reflection for circulating optical pulses within the at least one optical cavity while transmitting light at the optical pump light wavelength λp.

According to another aspect, the photonic integrated circuit mode-locked laser may include at least one optical tuner configured to tune the wavelength offset.

According to another aspect, the at least one first reflector may be configured to filter light that undergoes (i) amplification in the at least one optical cavity and (ii) spectral broadening while propagating in the at least one optical waveguide, and the at least one second reflector may be configured to filter the light that undergoes (i) amplification in the at least one optical cavity and (ii) spectral broadening while propagating in the at least one optical waveguide, and the at least one optical waveguide is configured to nonlinearly broaden, by self-phase modulation, light propagating in the at least one optical waveguide to establish optical pulses in the at least one optical cavity to provide at least one mode-locked laser pulse.

According to another aspect, the wavelength offset of the at least one first and second reflectors may suppress continuous-wave lasing in the at least one optical cavity or the photonic integrated circuit mode-locked laser.

According to another aspect, the at least one optical waveguide may comprise silicon nitride, and the at least one optical waveguide may include at least one erbium ion implanted silicon nitride section located between the at least one first and second reflectors.

According to another aspect, the at least one first and second reflectors, the at least one optical waveguide, and the at least one optical cavity may be supported by at least one photonic integrated circuit supporting substrate; the photonic integrated circuit mode-locked laser may include at least one photonic integrated circuit dispersion compensation device supported by the at least one photonic integrated circuit supporting substrate, the at least one photonic integrated circuit dispersion compensation device may be arranged on the at least one photonic integrated circuit supporting substrate to receive the generated at least one mode-locked laser pulse and may be configured to dispersion compensate the at least one mode-locked laser pulse to temporally compress the generated at least one mode-locked laser pulse.

According to another aspect, the at least one first and second reflectors, the at least one optical waveguide, and the at least one optical cavity may be supported by at least one photonic integrated circuit supporting substrate; the photonic integrated circuit mode-locked laser may include at least one photonic integrated circuit supercontinuum generator device supported by the at least one photonic integrated circuit supporting substrate; the at least one photonic integrated circuit supercontinuum generator device may be arranged on the at least one photonic integrated circuit supporting substrate to receive the generated at least one mode-locked laser pulse and may be configured to generate a supercontinuum from the received generated at least one mode-locked laser pulse.

According to another aspect, the at least one first and second reflectors, the at least one optical waveguide, and the at least one optical cavity may be supported by at least one photonic integrated circuit supporting substrate; the photonic integrated circuit mode-locked laser further may include at least one photonic integrated circuit dispersion compensation device supported by the at least one photonic integrated circuit supporting substrate, the at least one photonic integrated circuit dispersion compensation device may be arranged on the at least one photonic integrated circuit supporting substrate to receive the generated at least one mode-locked laser pulse and may be configured to dispersion compensate the at least one mode-locked laser pulse to temporally compress the generated at least one mode-locked laser pulse, and the photonic integrated circuit mode-locked laser may include at least one photonic integrated circuit supercontinuum generator device supported by the at least one photonic integrated circuit supporting substrate; the at least one photonic integrated circuit supercontinuum generator device may be arranged on the at least one photonic integrated circuit supporting substrate to receive the temporally compressed at least one mode-locked laser pulse from the at least one photonic integrated circuit dispersion compensation device, and may be configured to generate a supercontinuum from the received temporally compressed at least one mode-locked laser pulse.

A further aspect of the present disclosure concerns a method of providing and/or generating optical pulses or mode-locked pulses comprising providing the photonic integrated circuit mode-locked laser; and providing a seeding pulse to the at least one optical cavity of the photonic integrated circuit mode-locked laser to initiate optical pulse generation or mode-locked lasing.

To address the previously mentioned challenges and outperform state-of-the-start PIC-based devices, the device and method of the present disclosure include a mode-locking mechanism based on a Mamyshev oscillator configuration or architecture.

The inventive concept of the device and method of the present disclosure is based on Mamyshev regenerators, originally proposed by P.V.Mamyshev for optical regeneration, and combines self-phase modulation and spectral filtering to generate optical pulses. By concatenating, for example, two regenerators, a Mamyshev oscillator cavity is formed with a common nonlinear waveguide and spectrally offset filters. The resulting device of the present disclosure provides a multitude of advantages. For instance, unlike conventional approaches, a saturable absorber for mode locking is not required.

In the device of the present disclosure, low-power and continuous-wave signals can be, for example, suppressed by offset filtering. High-peak-power pulses can broaden spectrally in the nonlinear section, allowing them to pass and sustain lasing, effectively functioning as an artificial saturable absorber.

The device architecture is intrinsically tolerant to large intracavity nonlinear phase shifts, which may otherwise lead to pulse breakup in conventional MLLs, which in particular is a challenge for PIC waveguides exhibiting strong Kerr nonlinearity. In addition, advantageously, the components of the device of the present disclosure are of a small number, and include for example bandpass filters, which can for example be implemented using waveguide Bragg gratings (WBGs). This avoids the need for complex integration of semiconductor saturable absorbers or the challenging design of artificial saturable absorbers, simplifying the realization of high-performance mode-locked integrated lasers.

The present disclosure concerns a photonic integrated Mamyshev oscillator, leveraging the gain and nonlinearity in, for example, erbium-doped silicon nitride (Er:Si₃N₄) waveguides. The laser advantageously generates coherent nanojoule-level pulses, capable of directly driving an octave-spanning supercontinuum in, for example, a photonic integrated circuit supercontinuum generator device that comprises, for example, a dispersion-engineered Si₃N₄ waveguide without amplification.

There is thus provided a photonic integrated circuit mode-locked laser according to claim 1. Further advantageous features are provided by the features of the dependent claims.

Also presented herein, in an embodiment, is a photonic integrated circuit-based Mamyshev oscillator mode-locked laser comprising an exemplary erbium-doped silicon nitride photonic chip, delivering stable 161 pJ pulses at a repetition rate of 184.9 MHz.

The integrated laser or photonic integrated circuit laser or photonic integrated circuit mode-locked laser may include:
a first reflector,
a second reflector, and
at least one waveguide that may extend between the first and second reflectors and form at least one optical cavity between the first and second reflectors.

A first waveguide Bragg grating may form or be the first reflector, a second waveguide Bragg grating may form or be the second reflector, and the at least one waveguide may extend between the first and second waveguide Bragg gratings and may form at least one optical cavity between the first and second waveguide Bragg gratings.

The at least one waveguide may be a silicon nitride waveguide or comprise silicon nitride, or include a waveguide core comprising or consisting or silicon nitride.

The at least one waveguide may include a cladding layer/material supporting and/or embedding the waveguide core, and/or the cladding layer/material may comprise or consist of silicon oxide.

The optical cavity may comprise or be formed by a Mamyshev oscillator architecture or a linear cavity Mamyshev oscillator architecture.

The first and second waveguide Bragg gratings may be spectrally offset waveguide Bragg gratings.

The at least one waveguide may include at least one rare-earth ion implanted section and, optionally at least one or a plurality of non-rare-earth ion implanted section located between the first and second reflectors.

The at least one waveguide may include at least one rare-earth ion implanted section and first and second non-rare-earth ion implanted sections located between the first and second reflectors, the at least one rare-earth ion implanted section may be located between the first and second non-rare-earth ion implanted sections.

The at least one waveguide may include the at least one rare-earth ion implanted section and the optional non-rare-earth ion implanted sections located between the first and second reflectors. The at least one non-rare-earth ion implanted section may be located between the first and second rare-earth ion implanted sections, or between a rare-earth ion implanted section and a reflector.

The optical cavity may comprise a Si₃N₄ waveguide with partial erbium doping by ion-implantation and two spectrally offset waveguide Bragg gratings (WBGs).

The laser may be configured to provide self-phase modulation-induced spectral broadening of pulses within the waveguide, effectively bridging the gap or the center wavelength gap between Bragg gratings to enable lasing.

The waveguide may be a nonlinear waveguide. The waveguide may be a single-mode waveguide.

The waveguide may extend to define a spiral and/or coil arrangement, or the waveguide may extend to define a spiral and/or coil arrangement between the first and second reflectors.

The first waveguide Bragg grating may be an apodized waveguide Bragg grating configured to provide narrow-band reflection for circulating pulses while transmitting light at the pump light wavelength, and/or the second waveguide Bragg grating may be an apodized waveguide Bragg grating configured to provide narrow-band reflection for circulating pulses while transmitting light at the pump light wavelength.

The first waveguide Bragg grating may be configured to have a central wavelength or a reflection band or range having a central wavelength that is offset from that of the second waveguide Bragg grating.

The laser may include at least one optical tuner configured to tune the offset.

The laser may include at least one optical tuner configured to tune the offset, the optical tuner may comprise at least one integrated microheater or comprise at least one or a plurality of integrated piezoelectric materials.

The first waveguide Bragg grating may be configured to filter light that undergoes amplification in the optical cavity and spectral broadening while propagating in the waveguide, and the second waveguide Bragg grating may be configured to filter the light, and the optical cavity is configured to nonlinearly broaden the light to establish steady pulsing in the optical cavity.

The optical cavity, the waveguide and the first and second waveguide Bragg gratings may be arranged to nonlinear broaden and alternatively spectrally filter to provide an effective saturable absorber that enables mode-locking.

The first and second waveguide Bragg gratings may be spectrally offset waveguide Bragg gratings configured to suppress continuous-wave lasing in the cavity.

The laser may be supported by and/or superposed on at least one supporting substrate or layer. The laser may be or comprise a photonic integrated circuit mode-locked laser.

Another aspect concerns a method of providing/generating optical pulses or mode-Locked pulses comprising:
Providing the laser. The method may comprise providing a seeding pulse to the laser to initiate optical pulse generation or mode-locked lasing. The method may comprise providing a seeding pulse from a mode-locked laser picked by a Mach-Zehnder modulator (MZM).

Other advantageous features are disclosed herein.

The laser device of the present disclosure presents, for example, the first fully integrated, chip-scale mode-locked laser capable of generating ultrashort, high-energy optical pulses directly on a semiconductor chip. While traditional mode-locked lasers, essential for precision applications such as optical clocks, high-resolution imaging, surgery, and advanced manufacturing, rely on bulky fiber-based setups assembled from separate components, the approach of the present disclosure miniaturizes this powerful capability onto, for example, a compact silicon nitride photonic circuit. The laser employs, for example, a novel on-chip adaptation of the Mamyshev oscillator architecture, a concept previously demonstrated only in fiber lasers, leveraging exemplary erbium-doped silicon nitride waveguides fabricated using wafer-scale ion implantation technology. This innovation is shown to achieve pulse energies, for example, more than 60 times higher than previously reported integrated mode-locked lasers, significantly bridging the performance gap between integrated and fiber-based systems. By effectively harnessing nonlinear optical effects within a compact chip architecture, this technology offers substantial improvements in power and versatility, opening new possibilities for portable and integrated optical systems.

Traditional mode-locked lasers, essential for many high-precision applications such as optical clocks, biomedical imaging, laser machining, and spectroscopy, are typically large, expensive, and assembled from discrete optical components. Although miniaturization through photonic integration has been attempted, existing integrated lasers have limited performance, suffering from insufficient pulse energy, low peak power, and restricted spectral coverage. Consequently, integrated chip-scale mode-locked lasers have not yet achieved performance comparable to state-of-the-art fiber-based systems, thus limiting their use in applications requiring high peak power and peak energy. This disclosure provides a fully integrated, chip-scale mode-locked laser capable of generating intense, ultrafast optical pulses directly on, for example, a silicon nitride photonic integrated circuit. By providing a device comprising a novel on-chip Mamyshev oscillator architecture with, for example, erbium-doped waveguides, exemplary lasers of the present disclosure achieve pulse energies exceeding 161 pJ, representing a greater than 60-fold improvement over previously demonstrated integrated lasers. The compact, wafer-scale fabricated chip rivals traditional fiber laser performance, making it attractive for integrated systems utilizing nonlinear optics.

An unexpected and highly advantageous finding of the laser device of the present disclosure was achieving extremely high pulse energies (161.6 pJ off-chip, ~227 pJ on-chip) from a fully integrated photonic circuit, surpassing previous integrated mode-locked lasers by over 60-fold. This surprising result contradicts earlier literature using semiconductor gain and saturable absorber, which generally suggested inherent limitations in integrated photonics that prevented reaching fiber-like laser performance. By successfully providing, for example, the Mamyshev oscillator architecture of the laser device of the present disclosure in a compact silicon nitride chip (using, for example, novel erbium ion-implantation doping and spectrally offset waveguide Bragg gratings), a stable, high-energy mode-locking is demonstrated, thus challenging previous assumptions about the fundamental performance limits of integrated mode-locked lasers.

The inventors overcame significant technical obstacles by for example uniquely adapting the Mamyshev oscillator concept (previously demonstrated exclusively in fiber-based setups) to an integrated photonic platform, for example, the integrated silicon nitride photonic platform integrated silicon nitride photonic platform. A key challenge was achieving sufficient peak power and nonlinear optical effects on-chip, which is not straightforward due to inherent limitations of integrated platforms such as limited gain and typically high propagation losses. This is addressed by developing, for example, erbium-doped waveguides fabricated via precise ion implantation techniques to provide efficient and robust optical amplification at very high-power levels. Additionally, the inventors engineered exceptionally long and low-loss exemplary silicon nitride waveguides, enabling nonlinear spectral broadening to sustain stable mode-locking.

Commercial applications of the laser device and method of the present disclosure include integrated optical atomic clocks, portable frequency comb generators, precision spectroscopy, biomedical imaging systems (such as optical coherence tomography), laser surgery and medical diagnostics, advanced optical communications, and ultrafast laser machining systems.

There is provided substantial advantages in compactness, efficiency, and performance over existing laser solutions. High-precision, compact, and cost-effective optical devices can be provided. The laser device and method of the present disclosure is of interest in telecommunications, biomedical, aerospace, and semiconductor industries, where integrated ultrafast lasers can substantially enhance performance while reducing size and cost.

The above and other objects, features and advantages of the present invention and the manner of realizing them will become more apparent, and the invention itself will best be understood from a study of the following description with reference to the attached drawings showing some preferred embodiments of the invention.

### A BRIEF DESCRIPTION OF THE DRAWINGS

These and/or other aspects, features, and/or advantages will become apparent and more readily appreciated from the following description of various example embodiments, taken in conjunction with the accompanying drawings. Thicknesses of layers/elements, and sizes of components/elements, are not necessarily drawn to scale or in actual proportion to one another but rather are shown as example representations. Like reference numerals may refer to like parts throughout the several views. Each embodiment herein may be used in combination with any other embodiment(s) described herein.
Figure 1A is a schematic illustration of an exemplary laser device of the present disclosure comprising an integrated Mamyshev oscillator, or integrated Mamyshev oscillator configuration or integrated Mamyshev oscillator architecture. The indicated materials, dimensions and/or wavelengths are exemplary materials, dimensions and/or wavelengths.
Figure 1B is a microscope image of a fabricated laser photonic chip of the present disclosure.
Figure 1C is a schematic of an experimental setup used for operating the integrated Mamyshev oscillator laser device of the present disclosure (OSA: Optical spectrum analyzer, PD: photodetector, CIR: circulator, ISO: isolator, WDM: wavelength division multiplexer).
Figure 1D is a picture of an integrated Mamyshev oscillator laser device of the present disclosure in operation.
Figure 1E is a false-colored scanning electron microscopy image of an exemplary reflector of the laser device that is embodied as a waveguide Bragg grating (WBG).
Figure 1F is a schematic of an exemplary embodiment of a laser or laser device of the present disclosure.
Figure 1G is a simplified schematic cross-sectional illustration of a photonic integrated circuit supporting substrate in which the supporting substrate is shown supporting an optical waveguide.
Figure 2A shows reflection spectra of first and second reflectors comprised of a waveguide Bragg grating (WBG). Figure 2B shows a recorded optical spectrum of an output of an exemplary Mamyshev oscillator laser device of the present disclosure(resolution bandwidth: 0.5 nm, uncorrected). Figure 2C shows optical pulse intensity recorded by an oscilloscope (OSC), showing a stable pulse train without Q-switching. Figure 2D shows a measured radio frequency spectrum of the pulse intensity. Figure 2E shows a simulated intracavity pulse and chirp before reflection by the device WBG reflector.
Figure 3A is a schematic illustration of another exemplary laser device of the present disclosure comprising an integrated Mamyshev oscillator, or integrated Mamyshev oscillator configuration or integrated Mamyshev oscillator architecture. The indicated materials, dimensions and/or wavelengths are exemplary materials, dimensions and/or wavelengths.

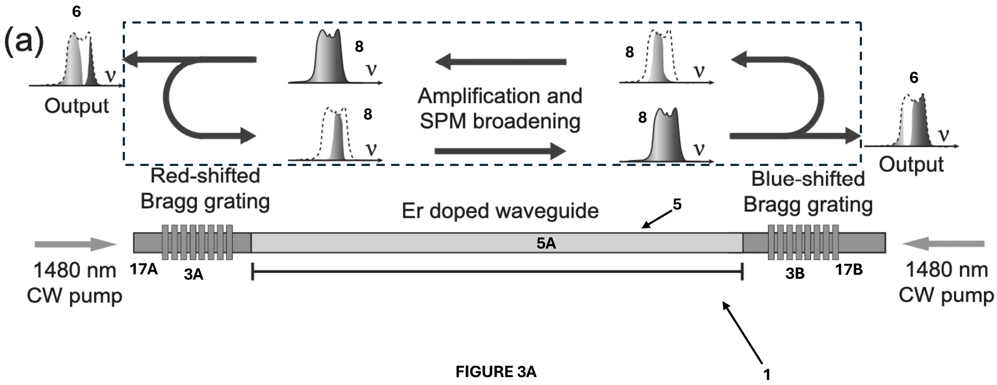

Figure 3A illustrates the working principle of the integrated Mamyshev oscillator laser device of the present disclosure that comprises of an exemplary 42 cm Er-doped Si₃N₄ waveguide sandwiched between two spectrally offset exemplary waveguide Bragg gratings.

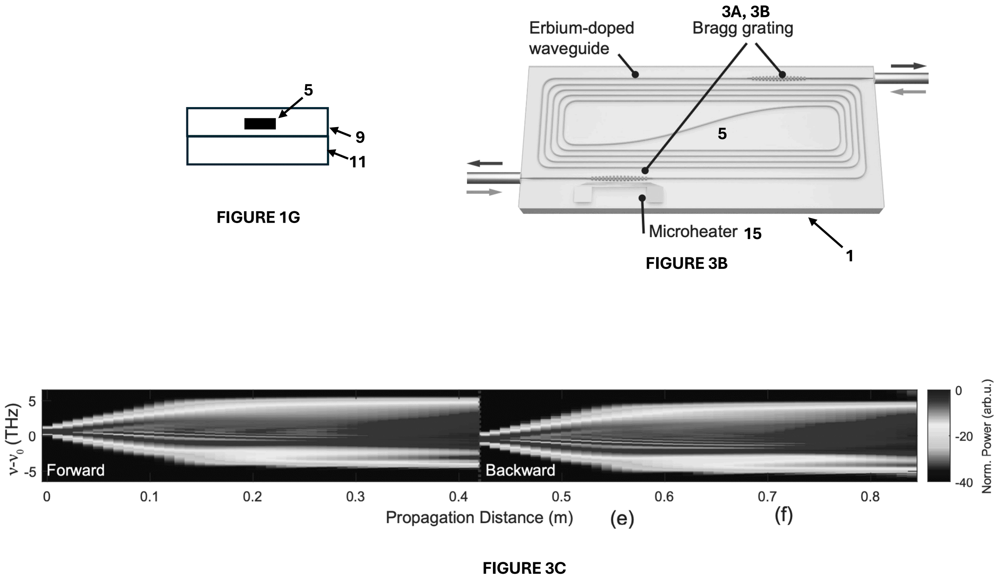

Figure 3B is a schematic of an exemplary embodiment of an integrated Mamyshev oscillator laser device of the present disclosure, showing an exemplary erbium-doped waveguide arranged in a spiral as well as the exemplary waveguide Bragg gratings and an integrated microheater for tuning of the waveguide Bragg grating.
Figure 3C is a numerically simulated optical spectrum of an exemplary Mamyshev oscillator laser device of the present disclosure as a function of propagation path length in the linear optical cavity.

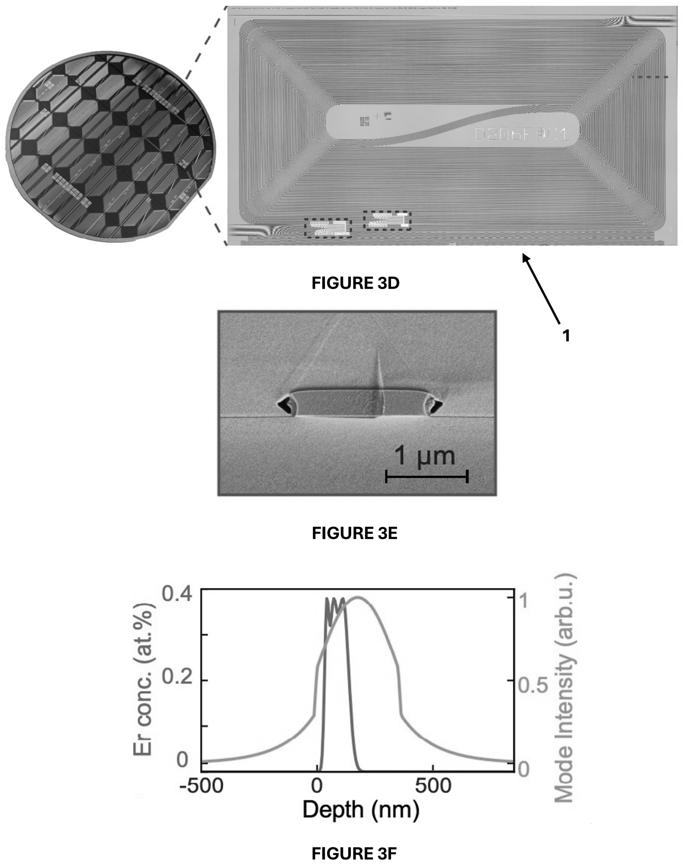

Figure 3D is photograph of a fabricated wafer and a chip that contains 26 individual Mamyshev oscillator laser devices or mode-locked lasers (MLLs). The dashed boxes indicate a location of the waveguide Bragg gratings.
Figure 3E is a false-colored scanning electron microscope (SEM) cross-sectional image of the doped optical waveguide of an exemplary laser device of the present disclosure.
Figure 3F shows a simulated fundamental transverse electric (TE) optical mode profile and an erbium concentration in an exemplary Si₃N₄ waveguide.

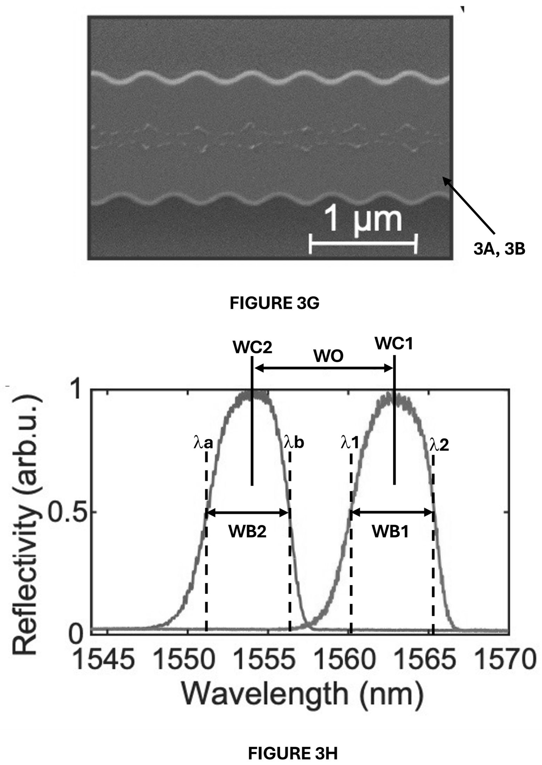

Figure 3G is a false-colored SEM image of an exemplary corrugated waveguide Bragg grating of the laser device of the present disclosure.
Figure 3H shows overlaid reflection spectra of the two exemplary waveguide Bragg gratings of the laser device of the present disclosure showing a spectral offset between passbands of the waveguide Bragg gratings.

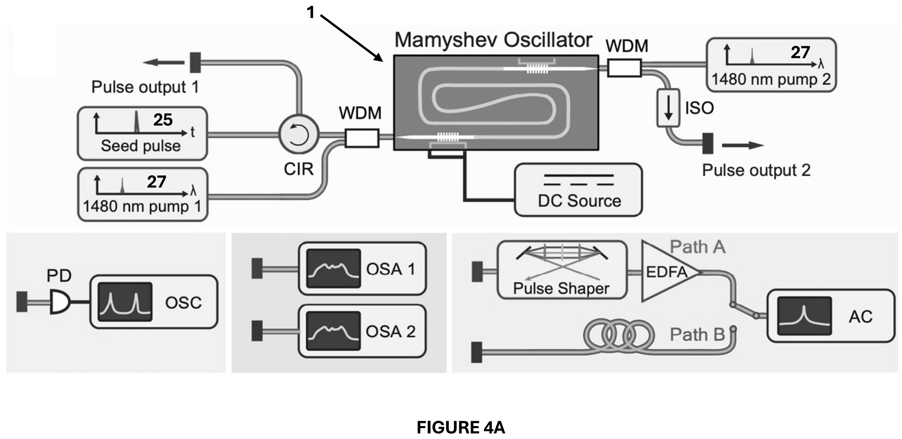

Figure 4A shows an exemplary experimental setup for characterization of the operation of the photonic integrated Mamyshev oscillator MLL of the present disclosure. The exemplary integrated Mamyshev oscillator laser device is pumped by 1480 nm light through the WBGs and initiated by an external seed pulse. Optical spectra and temporal characteristics are measured using optical spectrum analyzers (OSA 1 and OSA 2), a fast photodetector (PD) with oscilloscope (OSC), and an intensity autocorrelator (AC). ISO: isolator; CIR: circulator; EDFA: erbium-doped fiber amplifier.

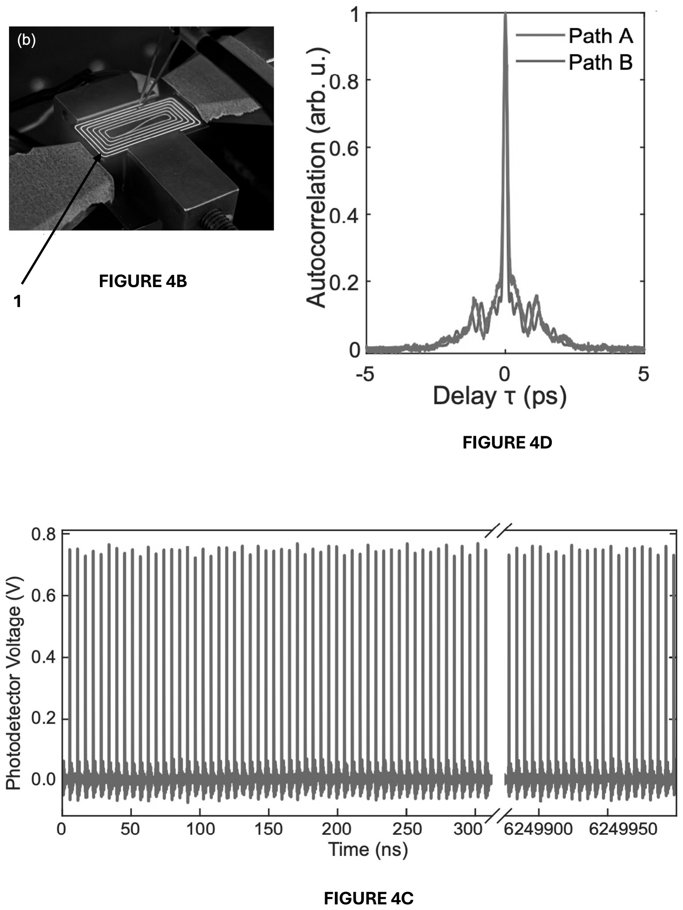

Figure 4B is a photograph of the integrated MLL device in operation.
Figure 4C shows a stable pulse train acquired via direct photodetection of the MLL device output.
Figure 4D shows optical intensity autocorrelation traces after optimized linear chirp compression using either a programmable filter (pulse shaper) and EDFA (Path A), or propagation through about 10.4 meters of single-mode silica fiber (Path B).
Figure 4E shows the evolution of the autocorrelation function under varying second-order dispersion compensation.

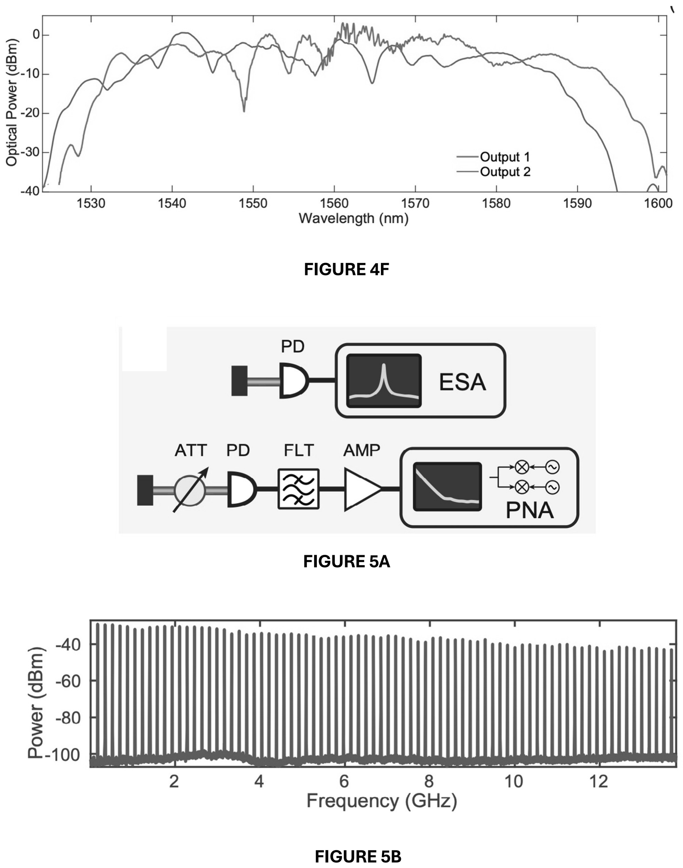

Figure 4F show optical spectra acquired at the two output ports of an integrated MLL device of the present disclosure at high pump power.

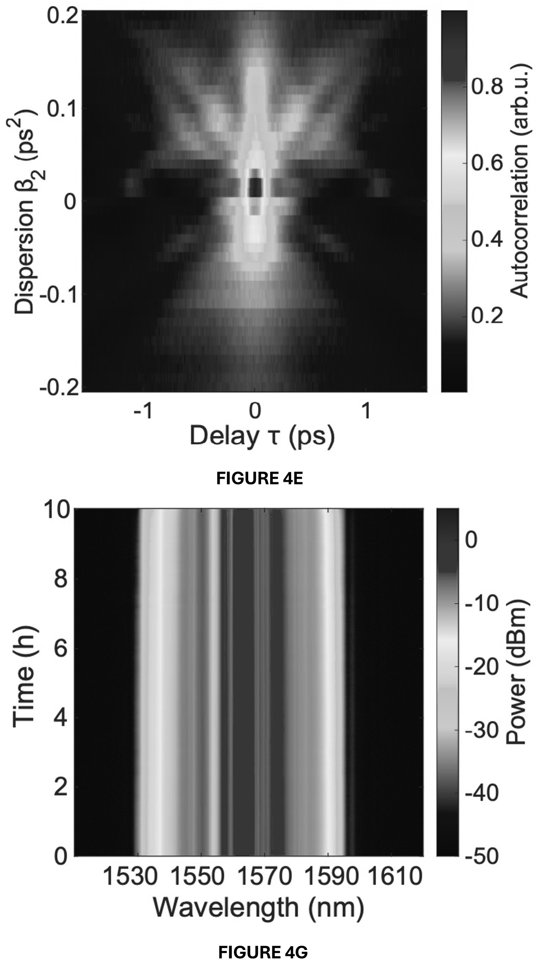

Figure 4G is a spectrogram of output 1 of Figure 4A recorded continuously over 10 hours when pumped with 820 mW by pump laser 2 (see Figure 4A).
Figure 5A schematically shows an exemplary setup for coherence characterization of the integrated mode-locked laser of the present disclosure and for repetition-rate beatnote (fᵣₑₚ) characterization via direct photodetection (ATT: attenuator; FLT: filter; AMP: amplifier).
Figure 5B shows a photo-detected electrical spectrum of the MLL output, showing multiple harmonics of the repetition rate (fᵣₑₚ).

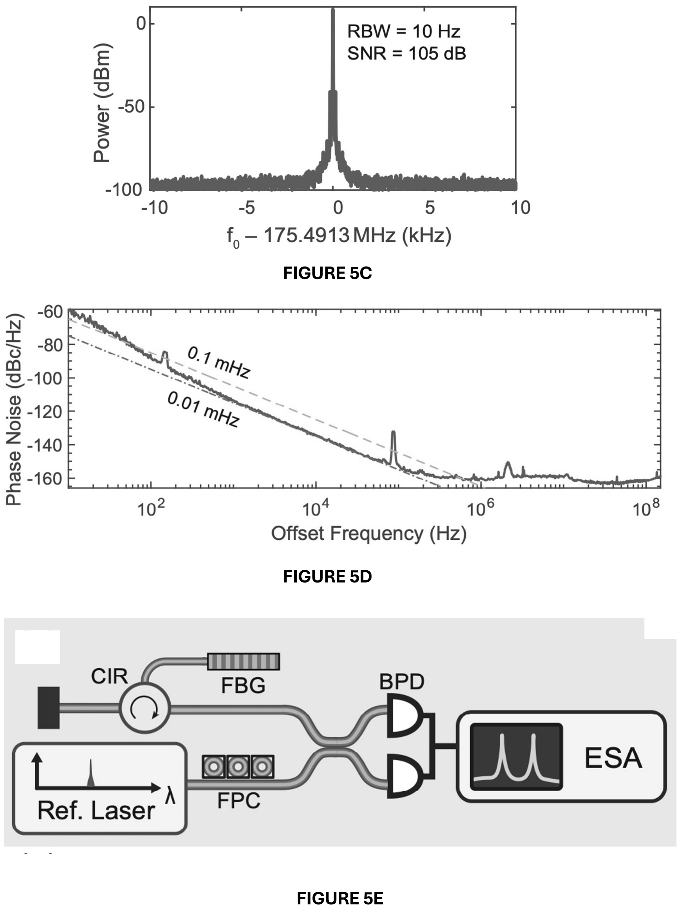

Figure 5C shows a measured (fᵣₑₚ) beatnote with a measured signal-to-noise ratio (SNR) of 105 dB at 10 Hz resolution bandwidth (RBW).
Figure 5D shows phase noise of the fᵣₑₚ beatnote with reference lines corresponding to 0.1 mHz and 0.01 mHz Lorentzian linewidth.
Figure 5E schematically shows an exemplary setup for heterodyne beatnote characterization of the integrated MLL. A portion of the MLL spectrum is preselected by a fiber Bragg grating (FBG) and interferences with a reference continuous-wave laser.

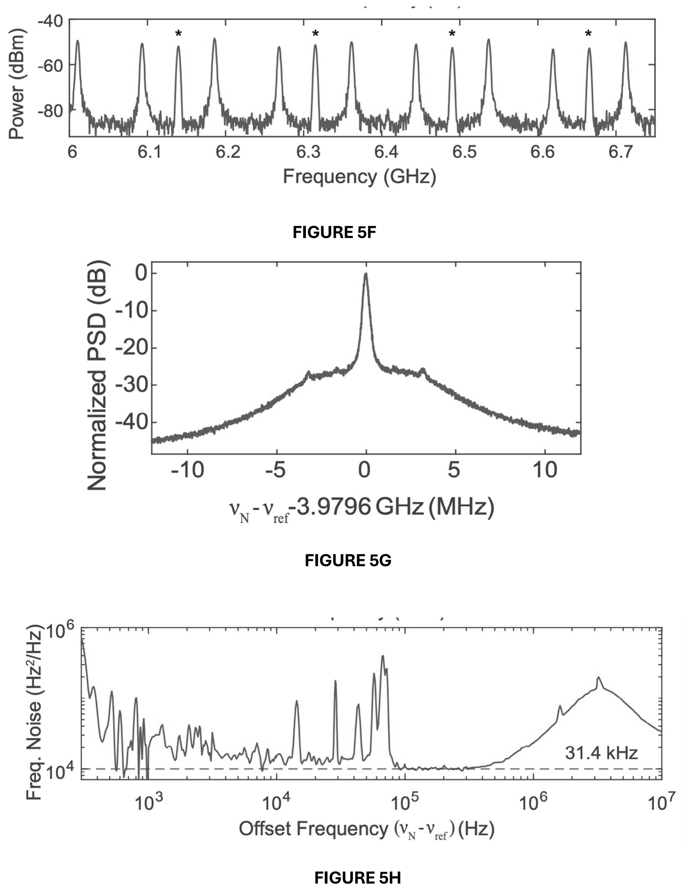

Figure 5F is a measured electrical spectrum of the heterodyne beatnote between the reference laser and the integrated MLL. Asterisks denote residual fᵣₑₚ harmonics resulting from imperfect common-mode suppression in the balanced photodetector (BPD).
Figure 5G is a power spectral density (PSD) of the heterodyne beatnote centered at 3.9796 GHz with a RBW of 12.47 kHz. The linewidth for a 10 ms measurement time is 174 kHz.
Figure 5H shows frequency noise of the heterodyne beatnote in Figure 5G, indicating a Lorentzian linewidth of 31.4 kHz for the optical comb line of the integrated MLL.

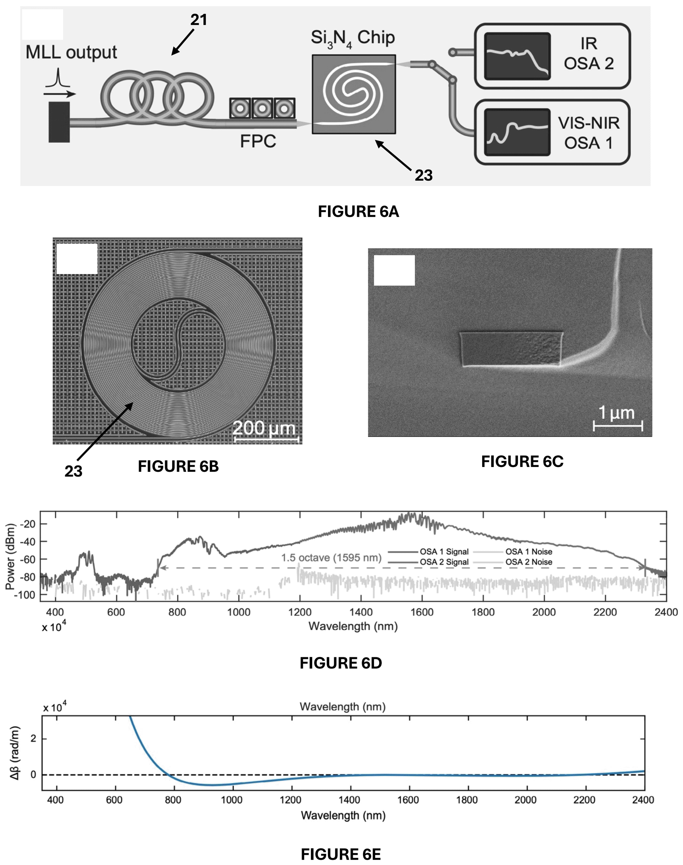

Figure 6A shows exemplary elements for supercontinuum generation directly driven by the integrated Mamyshev oscillator laser device of the present disclosure, where a supercontinuum generation is produced by an exemplary Si₃N₄ spiral waveguide, directly driven by the integrated MLL laser device of the present disclosure without post-amplification.
Figure 6B is a photograph of a Si₃N₄ spiral waveguide chip identical to the one used for supercontinuum generation. The internal tracking number of the sample used in experiment is D7802F4C4.
Figure 6C is a false-colored SEM cross-section image of the waveguide of Figure 6B.
Figure 6D is a spectrum of the generated 1.5-octave spanning supercontinuum. The -20 dB bandwidth is 18.7 THz.
Figure 6E is a simulated integrated dispersion of the spiral waveguide used in the measurement and demonstration of Figures 6A to 6D.

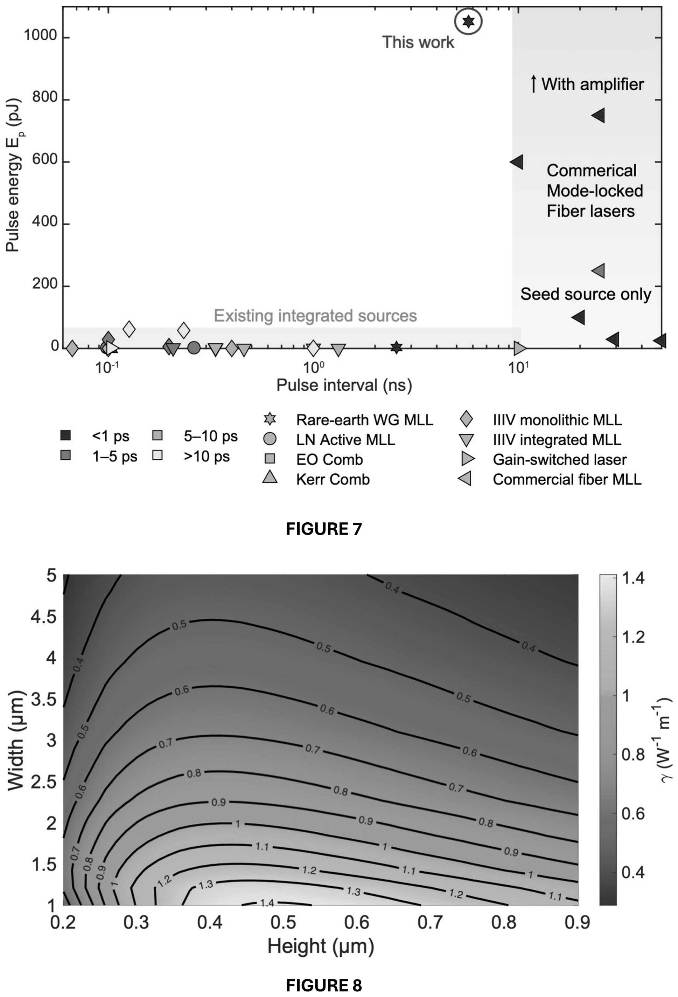

Figure 7 shows a comparison with state-of-the-art integrated ultrafast pulse sources in terms of pulse energy Eₚ and pulse interval (1/fᵣₑₚ). The shade of the markers represents the pulse width.
Figure 8 shows computed Kerr nonlinear coefficient γ as a function of a width and height of a Si₃N₄ waveguide at 1.55 µm wavelength.

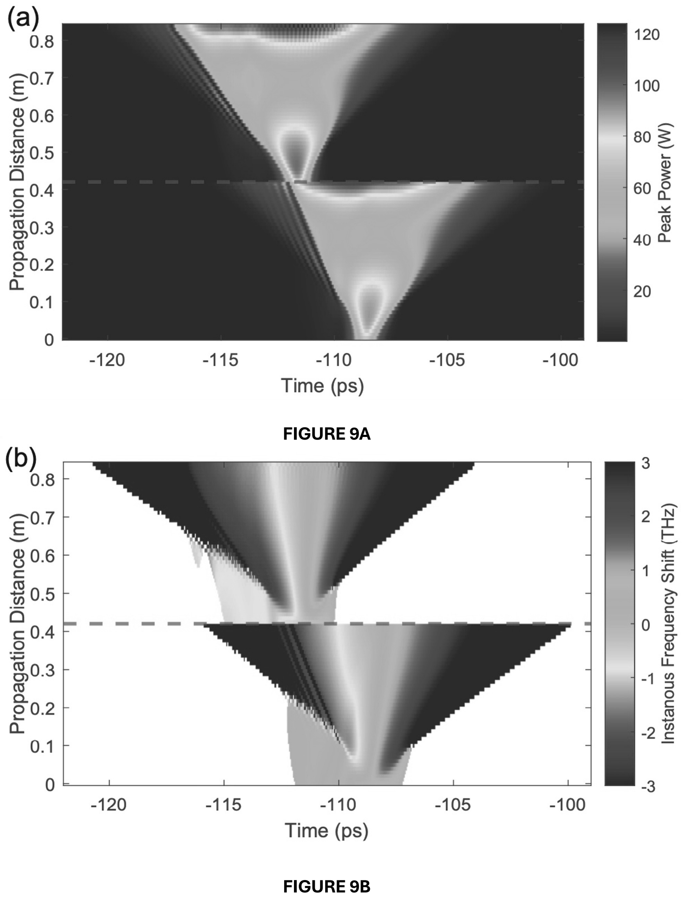

Figures 9A and 9B concern pulse propagation in time domain. Figure 9A shows time-domain intensity of the pulse as a function of propagation length within the cavity. The dashed line indicates the transition from forward to backward propagation after filtering. Figure 9B shows instantaneous frequency of the pulse as a function of propagation distance. The white area indicates where the pulse intensity is <1 ×10⁻³ of the peak and the chirping is irrelevant.

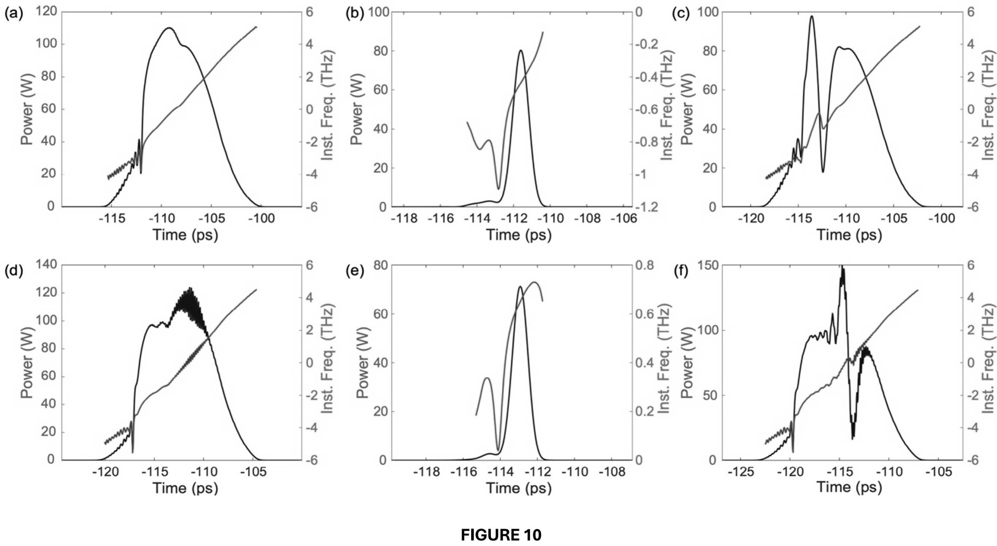

Figures 10A to 10F show pulse waveforms and chirp at key locations. Figure 10A shows a pulse after forward propagation, before WBG reflection. Figure 10B shows a pulse after forward propagation, immediately after reflection. Figure 10C shows an output pulse transmitted through WBG after forward propagation. Figures 10d to 10F show the same as
Figures 10A to 10C but for backward propagation.

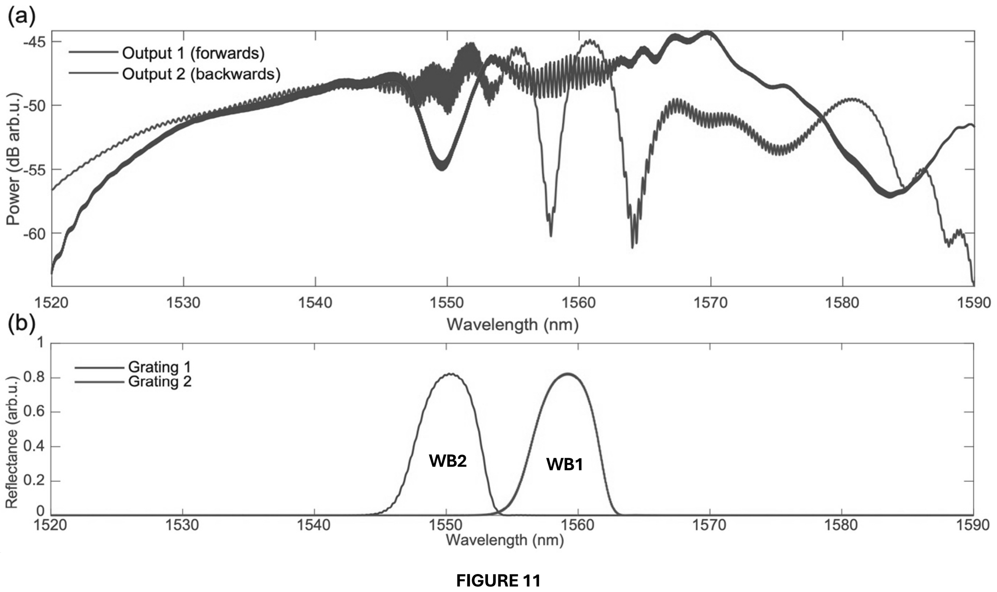

Figures 11A and 11B show simulated frequency-domain results, where Figure 11A shows an output spectrum of the Mamyshev oscillator laser device, and Figure 10B shows reflectance spectra of the WBGs including modeled parasitic reflections represented as delayed uniform reflections.

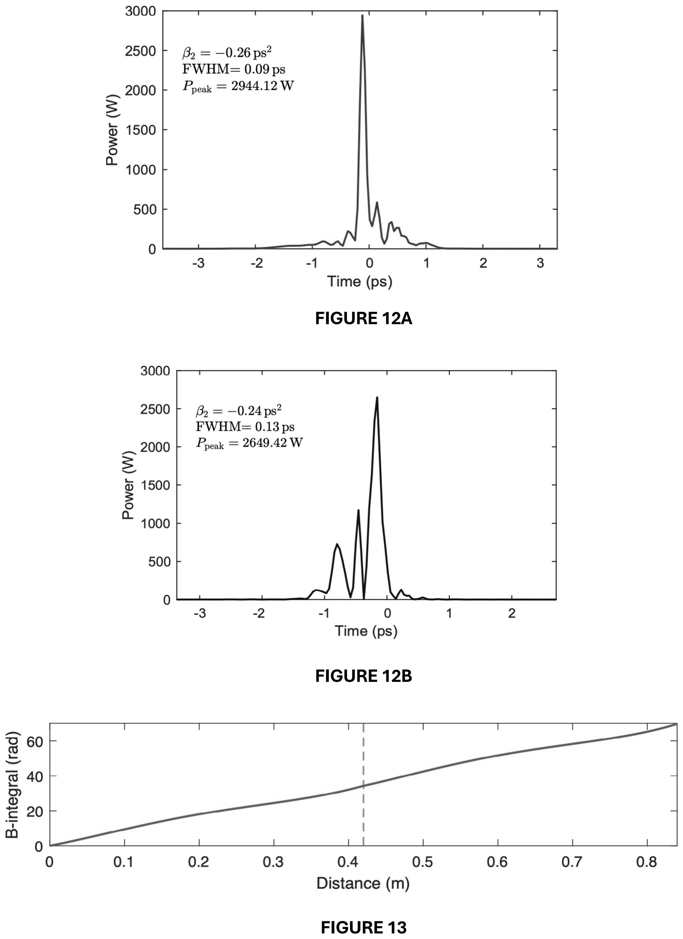

Figures 12A and 12B show compressed output pulses, with Figure 12A showing forward-propagated output pulse after second-order dispersion compensation, and Figure 12B showing backward-propagated output pulse after dispersion compensation. β₂: second-order dispersion applied. FWHM: full width at half maximum of the compressed pulse. Pₚₑₐₖ: peak power after compression.
Figure 13 shows an accumulated nonlinear phase shift (B-integral) during pulse propagation in the linear cavity. The vertical line separates forward and backward propagation segments.

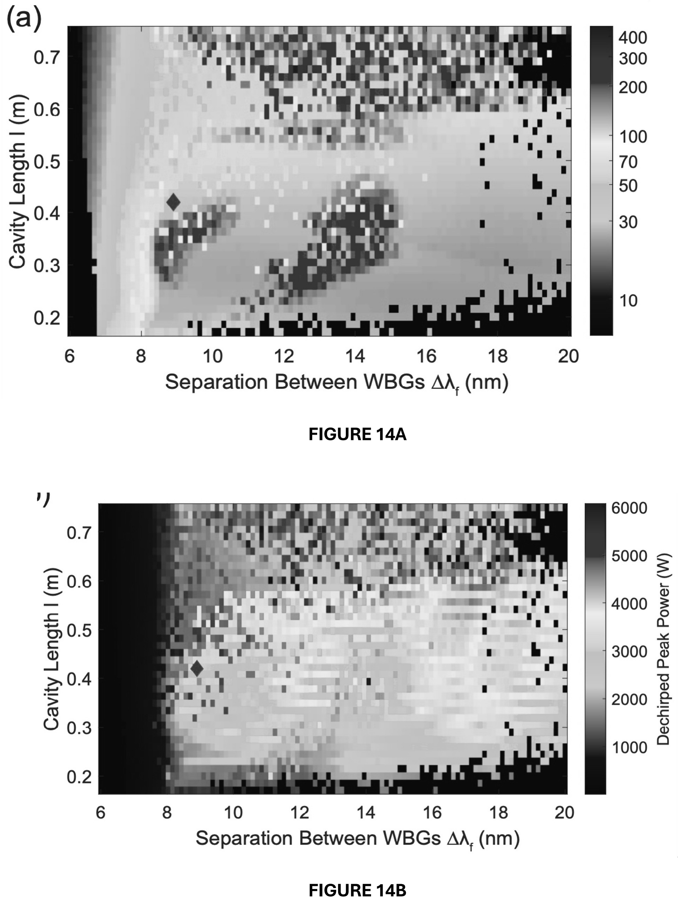

Figures 14A and 14B show parameter maps of peak power, Figure 14A shows intracavity peak power after backward propagation as a function of WBG center wavelength offset Δλf and cavity length l. The map is in logarithmic scale. Figure 14B shows output peak power after optimal second-order dispersion compensation. The diamond marker indicates the location of an exemplary design.

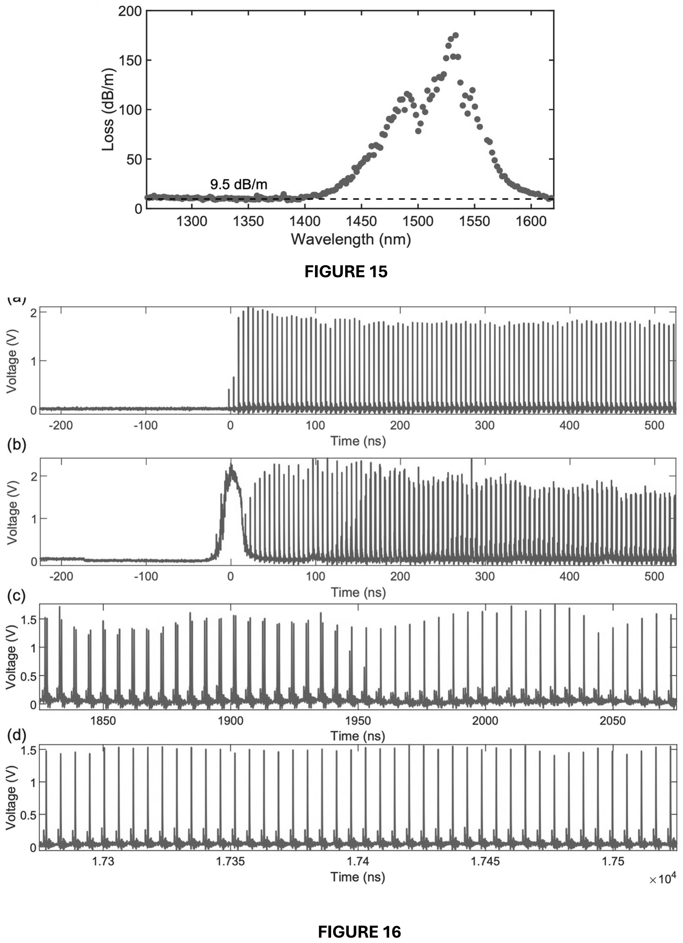

Figure 15 shows waveguide loss after ion implantation measured by OFDR. The dashed dark line indicates the estimated background loss of approximately 9.5 dB/m, inferred from the measured loss between 1300 nm and 1370 nm.
Figures 16A to 16D show waveguide instantaneous output power during the pulse build-up process, monitored with a photodetector and oscilloscope. Figure 16A shows pulse evolution immediately after mode-locking is initiated by an external mode-locked laser. Figure 16B shows pulse evolution after initialization using an external cavity and Q-switch. Figure 16C shows transition from a double-pulse state to a single-pulse state, occurring approximately 340 round-trips after Figure 16B. Figure 16D shows a stable pulse trace recorded approximately 3000 round-trips after Figure 16B.

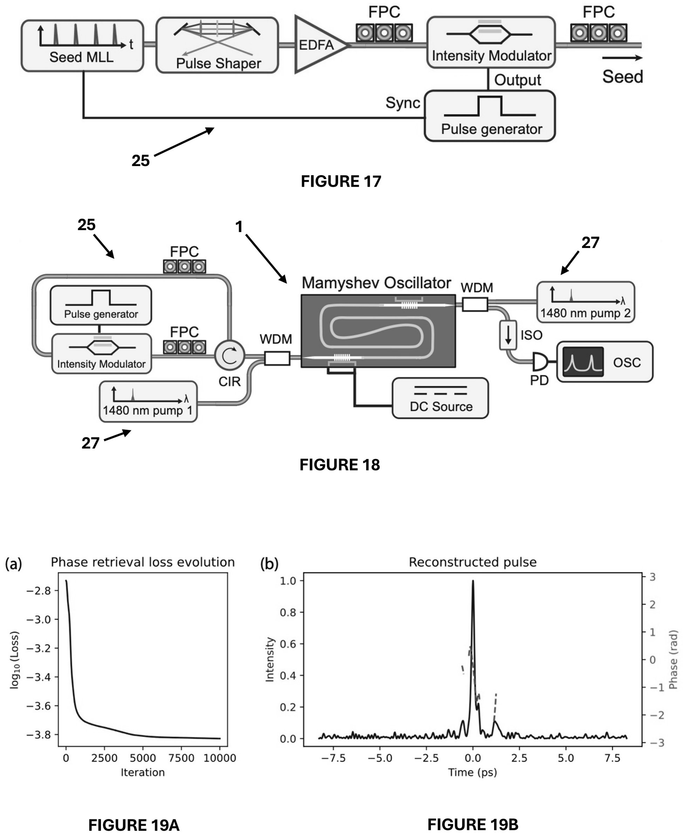

Figure 17 schematically shows an exemplary seed source that can be used to initiate Mamyshev oscillator operation of the laser device of the present disclosure.
Figure 18 schematically shows an exemplary setup or system for initiating Mamyshev oscillator operation of the laser device of the present disclosure using an extended cavity Q-switching device and method.
Figure 19A shows the evolution of loss during the phase retrieval process.
Figure 19B shows a reconstructed pulse intensity and phase at the shortest pulse width, with dispersion value β2 = 0.0189 ps². The phase is shown only in regions where the pulse intensity is sufficiently high.

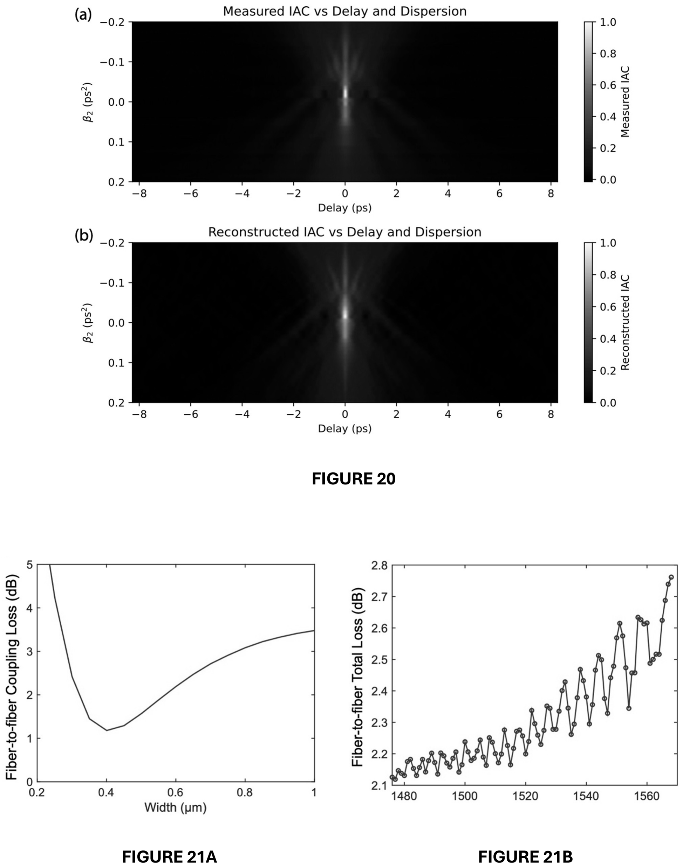

Figure 20A shows measured and Figure 20B shows a reconstructed intensity autocorrelation function, shown as a function of dispersion β2 and delay.
Figure 21A and 21B show fiber to waveguide coupling loss. Figure 21A shows simulated fiber to chip to fiber coupling loss of TE mode of a cladded 350 nm thick Si₃N₄ waveguide to the UHNA7 fiber for different taper widths at 1.55 µm. Figure 21A shows measured loss from fiber to chip to fiber for a 2 cm reference bus waveguide.

The accompanying drawings, which are incorporated herein and constitute part of this specification, illustrate the presently preferred embodiments of the invention, and together with the general description given above and the detailed description given below, serve to explain features of the invention.

### DETAILED DESCRIPTION OF SEVERAL EMBODIMENTS

The following detailed structural and/or functional description(s) is/are provided as examples only, and various alterations and modifications may be made. The example embodiments herein do not limit the disclosure and should be understood to include all changes, equivalents, and replacements within ideas and the technical scope herein. Hereinafter, certain examples will be described in detail with reference to the accompanying drawings. When describing various example embodiments with reference to the accompanying drawings, like reference numerals may refer to like components and a repeated description related thereto may be omitted.

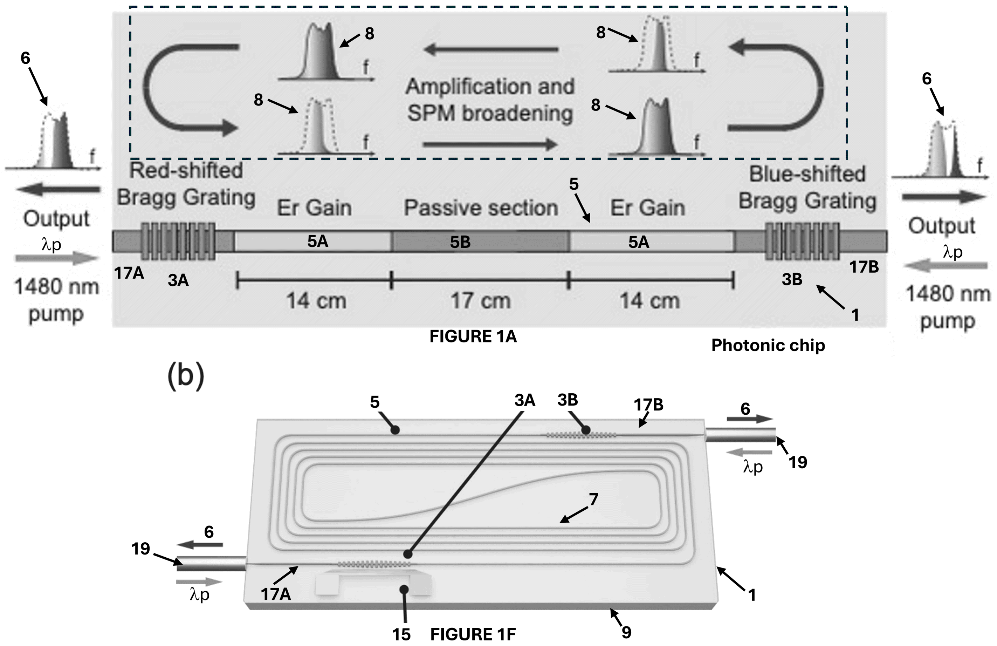

Referring to Figures 1A, 1F, 3A and 3B, these Figures schematically show exemplary embodiments of a laser or laser device 1 of the present disclosure.

The laser or laser device 1 is, for example, a photonic integrated laser, photonic integrated circuit laser or a photonic integrated circuit mode-locked laser. The laser or laser device 1 is, for example, a photonic integrated Mamyshev oscillator laser, a photonic integrated Mamyshev oscillator mode-locked laser or a high-energy mode-locked photonic integrated Mamyshev oscillator laser.

The laser device 1 includes at least one first reflector 3A, at least one second reflector 3B, and at least one optical waveguide 5. The optical waveguide 5 may extend between the first reflector 3A and the second reflector 3B. The optical waveguide 5 forms at least one optical cavity 7 extending between the first reflector 3A and the second reflector 3B.

The optical cavity 7 comprises or is formed, for example, by a Mamyshev oscillator architecture or a linear cavity Mamyshev oscillator architecture.

The optical waveguide 5, or a portion or section thereof, is configured to amplify light propagating in or through the optical cavity 7 between the first reflector 3A and the second reflector 3B. The optical waveguide 5 is, for example, configured to amplify light in an amplification wavelength range of the optical waveguide 5.

The waveguide 5 includes at least one (elongated) optical gain medium 5A. The optical gain medium 5A is configured to generate excited optical states in the optical gain medium to amplify or increase the intensity of light propagating in the optical waveguide 5 and/or the optical cavity 7. The optical gain medium 5A, in an example embodiment, comprises at least one rare-earth ion implanted section 5A.

The waveguide 5 (and/or a waveguide core thereof) includes at least one rare-earth ion implanted section 5A configured to amplify light propagating through the optical waveguide 5 and/or the optical cavity 7, in certain example embodiments. **In** an example embodiment, the waveguide 5 (and/or a waveguide core thereof) may include a plurality of rare-earth ion implanted sections 5A. The waveguide 5 (and/or a waveguide core thereof) may include, in certain example embodiments, at least one non-rare-earth ion implanted section 5B located between the first and second reflectors 3A, 3B.

Figure 1A illustrates an exemplary embodiment including a non-rare-earth ion implanted section 5B located between first and second rare-earth ion implanted sections 5A. The rare-earth ion implanted sections each have an exemplary extension length of 14cm, and the non-rare-earth ion implanted section has an exemplary extension length of 17cm in the exemplary embodiment illustrated in Figure 1A. Figure 3A illustrates an exemplary embodiment including a rare-earth ion implanted section 5A having a longer exemplary extension length of 42cm.

At least one rare-earth ion implanted section 5A and first and second non-rare-earth ion implanted sections 5B may be located between the first and second reflectors 3A, 3B. The rare-earth ion implanted section 5A is located between the first and second non-rare-earth ion implanted sections 5B.

The implanted rare-earth ions or atoms may, for example, consist of or comprise Erbium, Ytterbium, or Thulium. The implanted rare-earth ions may, for example, comprise at least one of: Erbium, Ytterbium, Thulium. Implanting different rare-earth ions permits to provide gain/amplification at a wide wavelength range. Implanted rare-earth ions such as ytterbium (emission at 1.1µm) and thulium (0.8 µm, 1.45 µm and 2.0 µm) permit to provide optical gain in these wavelength regions. The implanted rare-earth ions may, for example, comprise or consist of (i) Erbium and Ytterbium, or (ii) Erbium and Thulium, or (iii) Erbium, Ytterbium and Thulium. Co-doping with different rare-earth ions permits gain (amplification) in multiple wavelength regions in the optical waveguide 5.

In an exemplary embodiment of the present disclosure for which measured data is presented herein to demonstrate optical pulse generation by the laser device of the present disclosure, the waveguide 5 and/or the rare-earth ion implanted section 5A include erbium Er doping by ion-implantation.

The optical waveguide 5 is, for example, a nonlinear optical waveguide. The optical waveguide 5 comprises or consists of, for example, at least one nonlinear optical material that may exhibit or provide nonlinear optical effects. The nonlinear optical material may, for example, exhibit optical properties that are not linearly proportional to the intensity of incident light. The material may, for example, produce optical effects that depend on the optical power of the incident electromagnetic field to produce or generate nonlinear interactions between light and matter in the material.

In certain exemplary embodiments, the waveguide 5 is a single-mode waveguide.

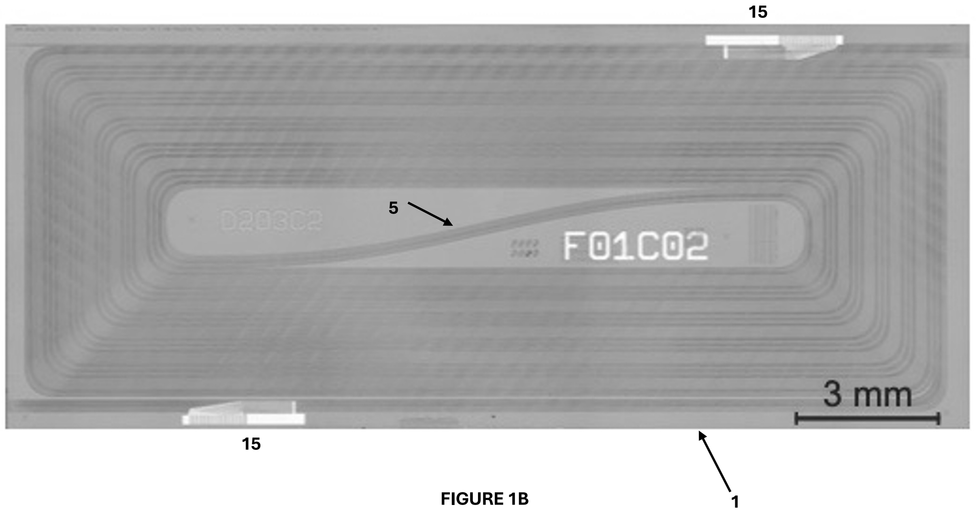

In certain exemplary embodiments, the waveguide 5 extends to define a spiral and/or coil arrangement, or the waveguide 5 extends to define a spiral and/or coil arrangement between the first and second reflectors 3A, 3B (see, for example, Figure 1B and 3D).

In certain example embodiments, optical waveguide 5 is a silicon nitride waveguide or comprises silicon nitride. In certain example embodiments, the waveguide 5 includes at least one erbium ion implanted silicon nitride section 5A located between the first and second reflectors 3A, 3B.

The optical waveguide 5 may comprise, for example, an elongated waveguide core. The optical waveguide 5 may comprise, for example, at least one cladding layer or material 9 (or a plurality thereof) that encloses (partially or fully) the elongated waveguide core. The elongated waveguide core and the enclosing cladding material or layer form the optical waveguide 5 or an optical waveguide device.

The cladding layer or material supports and/or embeds the waveguide core.

In certain example embodiments, the cladding layer or material may comprise or consist of silicon oxide. The waveguide core may, for example, comprise or consist of silicon nitride.

The laser or laser device 1 is, for example, a photonic integrated laser or laser device 1, or a photonic integrated circuit laser or laser device 1. The components or elements of the laser 1 are, for example, supported by at least one photonic integrated circuit supporting substrate and/or by at least one photonic integrated circuit supporting layer or photonic integrated circuit supporting layers. The components or elements of the laser 1 are, for example, superposed on at least one photonic integrated circuit supporting substrate and/or on at least one photonic integrated circuit supporting layer or photonic integrated circuit supporting layers.

In certain example embodiments, the first and second reflectors 3A, 3B, the optical waveguide 5, the optical cavity 7 are supported by at least one photonic integrated circuit supporting substrate 11. Figure 1G is a simplified schematic cross-sectional illustration of a photonic integrated circuit supporting substrate 11 in which the supporting substrate 11 is shown supporting the optical waveguide 5. It is noted that the other elements of the photonic integrated circuit laser device 1 are also supported but not shown for clarity reasons. The optical cavity Mamyshev oscillator architecture of the laser 1 for generating and outputting mode-locked laser pulses 6 is supported on or by the photonic integrated circuit supporting substrate 11 and forms a photonic integrated circuit laser 1.

The supporting substrate or layer 11 may comprise or consist of at least one semiconductor material. The supporting layer or substrate 11 may, for example, may be of any suitable material, may preferably comprise or consist of MgF₂ or CaF₂, or more preferably comprise or consist of silicon, for example, a silicon wafer.

The first reflector 3A of the laser device 1 is, for example, configured to at least partially reflect light in a first wavelength band WB1 (see, for example, Figures 3H and 11B). The first reflector 3A of the laser device 1 is, for example, configured to reflect light into the optical waveguide 5 for light amplification and for propagation towards the second reflector 3B.

The second reflector 3B is, for example, configured to at least partially reflect light in a second wavelength band WB2. The second reflector 3B is, for example, configured to reflect light into the optical waveguide 5 for light amplification and for propagation towards the first reflector 3A.

Peak light reflectance by the first and/or second reflector 3A, 3B may, for example, be between 25% and 99.9%; or between 50% and 99.9%, or between 75% and 99.9%.

The first wavelength band WB1 and the second wavelength band WB2 may, for example, be non-overlapping or may partially overlap. The first wavelength band WB1 and the second wavelength band WB2 may, for example, be defined at a full width at half maximum FWHM value (for example, the range of wavelengths between two wavelength values that are at half a maximum reflectance value) or can be defined by any other suitable manner. It is preferably defined identically for each reflector.

The laser device 1 is configured to implement a Mamyshev oscillator architecture on a photonic chip or photonic integrated circuit. The Mamyshev oscillator architecture is implemented on and supported on the photonic integrated circuit supporting substrate 11.

The optical cavity 7 forms a linear optical cavity Mamyshev oscillator architecture for generating and outputting mode-locked laser pulses 6. **In** this implemented Mamyshev oscillator architecture, the second wavelength band WB2 is, for example, offset or at least partially offset in wavelength from the first wavelength band WB1 by a wavelength offset WO.

The wavelength band offset may be a partial offset or a full offset.

The first wavelength band WB1 has, for example, a first central wavelength WC1, and the second wavelength band has, for example, a second central wavelength WC2. The first central wavelength WC1 is offset from the second central wavelength WC2. The wavelength offset WO may, for example, be defined or extend between the first and second central wavelengths WC1, WC2.

The central wavelength WC may be defined in any suitable manner. The central wavelength WC may, for example, be located at the center of the wavelength band WB. For example, is the wavelength located the middle point of the wavelength band. For instance, referring to the first wavelength band WB1 of Figure 3H, WC1 = λ1 + (λ2 - λ1)/2.

The wavelength offset WO may, for example, between 2nm and 20nm, for example, 10nm, however, this is system dependent, and an optimal or desired device operation may require an offset different to the above exemplary values.

The wavelength offset of the first and second reflectors 3A, 3B suppresses continuous-wave lasing in the optical cavity 7 and/or the photonic integrated circuit mode-locked laser 1.

This offset may be set or determined depending on the reflectance profile and/or reflectance amplitude of each reflector. This offset may be changed and set dynamically or during device operation by at least one optical tuner 15 configured to tune or displace the reflector spectrum or the wavelength band of the reflector 3A, 3B. An optical tuner 15 may, for example, be located adjacent to the reflector or each reflector, or operatively connected to the reflector to tune the reflector to set the wavelength offset WO.

In an exemplary embodiment, the optical tuner 15 comprises at least one integrated heater or microheater integrated on the photonic integrated circuit, and/or on the supporting substrate or layer 11. In an embodiment, the heater or microheater may, for example, include a conducting filament extending between first and second electrical pads. Thermal energy for tuning or displacing the reflector spectrum or the wavelength band is generated, for example, by circulating an electrical current through the filament.

The optical waveguide 5 is configured to simultaneously (i) amplify light in the optical cavity 7 at least in the wavelength offset WO and (ii) generate, or produce, or provide for self-phase modulation of an optical pulse 8 propagating or travelling in the optical waveguide 5 and/or the optical cavity 7. This allows to generate a mode-locked laser pulse 6, that is outputted by the first or second reflector 3A, 3B.

In addition to the wavelength offset WO, the optical waveguide 5 can also be configured to amplify light in the optical cavity 7 in the first and second wavelength bands, and/or at wavelengths outside and higher/longer than the first wavelength band WB1 as well as at wavelengths outside and lower/shorter than the second wavelength band WB2.

The self-phase modulation provided by the optical waveguide 5 spectrally extends a spectral range or spectrum of the (internal-cavity) optical pulse 8, propagating in the optical waveguide 5 and/or the optical cavity 7. The spectral range or spectrum of the (internal-cavity) optical pulse 8 extends or expands in the wavelength offset WO or at least in the wavelength offset WO between the first and second wavelength bands WB1, WB2.

Self-phase modulation is a well-known non-linear optical effect in which, for example, a pulse of light propagating in a medium, such as the optical waveguide 5, induces a change in refractive index of the material of the optical waveguide 5 (for example due to the Kerr effect) resulting in an optical phase shift in the optical pulse 8 that changes the spectrum of the optical pulse 8 to spectrally extend or broaden the spectral range or spectrum of the optical pulse 8.

The optical waveguide 5 is configured to provide or generate self-phase modulation-induced spectral broadening of the optical pulse 8, for example, across or at least across the wavelength offset WO to bridge the wavelength offset WO to enable lasing or mode-locked lasing and output mode-locked optical pulses 6.

The upper dashed-box section of Figures 1A and 3A schematically illustrates the mechanism of amplification and SPM broadening of light or travelling light pulses propagating in the waveguide 5 and optical cavity 7 to result in generation and/or outputting of mode-locked optical pulses 6 from the reflectors 3A, 3B. The mechanism corresponds to the Mamyshev oscillator mechanism of generating mode locked laser pulses. The offset first and second reflectors 3A, 3B effectively act as a saturable absorber suppressing continuous wave lasing and permit an optical pulse 8 to be sustained and propagated in the optical cavity 7 and undergoes self-phase modulation spectral broadening during propagation between the first and second reflectors 3A, 3B. The spectral broadening and amplification increase the energy of the optical pulse 8 which passes or is transmitted through the first or second reflector 3A, 3B to output a laser pulse 6 or a mode-locked pulse 6. The mechanism can continually output a train of laser or a mode-locked optical pulses 6 (see for example Figure 4C).

The first reflector 3A is, for example, configured to filter light that undergoes amplification in the optical cavity 7 and spectral broadening while propagating in the optical waveguide 5. The reflector 3A can provide an (internal) optical pulse 8 back to the optical cavity 7 and an outputted (external) optical pulse 6 emitted by the laser 1. The second reflector 3B is configured to filter the light that undergoes amplification in the optical cavity 7 and spectral broadening while propagating in the optical waveguide 5. The reflector 3B can also provide an (internal) optical pulse 8 back to the optical cavity 7 and an outputted (external) optical pulse 6 emitted by the laser 1.

The optical waveguide 5 is configured to nonlinearly broaden, by self-phase modulation, light propagating in the optical waveguide 5 to establish the optical pulses 8 in the optical cavity 7 to provide or produce the mode-locked laser pulses 8 transmitted or outputted by the first and/or second reflectors 3A, 3B.

The laser 1 is, for example, configured to provide self-phase modulation-induced spectral broadening of pulses within the waveguide, effectively bridging the gap between reflectors (for example, Bragg gratings) to enable lasing.

The spectral range or spectrum of the optical pulse 8, reflected from the reflector 3A, 3B back into the optical waveguide 5, extends or expands in the wavelength offset WO or at least in the wavelength offset WO and may also extend or expand beyond the first and second wavelength bands WB1, WB2, that is to wavelengths longer than the wavelengths of the first wavelength band WB1 (>λ2) and to wavelengths shorter than the wavelengths of the second wavelength band WB2 (<λa).

The first reflector 3A is configured to output the mode-locked laser pulse 6. The laser device 1 includes, for example, a first pulse output port 17A for outputting the mode-locked laser pulse 6. The wavelength band reflectance profile of the first reflector 3A is such that light or pulse light, in wavelengths outside the wavelength band and light in wavelengths inside the wavelength band that are partially reflected, is transmitted by the first reflector 3A and outputted as a mode-locked laser pulse 6 via the first pulse output port 17A. In an exemplary embodiment, the first reflector 3A is also configured to transmit light at an optical pump wavelength to transfer optical pump light λp to the optical gain medium or section 5A of the optical waveguide 5 to generate excited optical states in the optical gain medium or section 5A.

The second reflector 3B is, alternatively or additionally, configured to output the mode-locked laser pulse 6. The laser device 1 includes, for example, a second pulse output port 17B for outputting the mode-locked laser pulse 6. The wavelength band reflectance profile of the second reflector 3B is such that light or pulse light, in wavelengths outside the wavelength band and light in wavelengths inside the wavelength band that are partially reflected, is transmitted by the second reflector 3B and outputted as a mode-locked laser pulse 6 via the second pulse output port 17B. In an exemplary embodiment, the second reflector 3B is also configured to transmit light at the optical pump wavelength to transfer optical pump light λp to the optical gain medium or section 5A of the optical waveguide 5 to generate excited optical states in the optical gain medium or section 5A.

The pulse output port 17A, 17B may include, for example, an output waveguide section of the optical waveguide 5 and/or an exposed outer cross-sectional facet of the optical waveguide 5. The facet may, in an exemplary embodiment, provide the optical pulses 6 to another device on or external to the integrated photonic circuit and/or on or external to the supporting substrate 11. The output waveguide section of the optical waveguide 5 may, in an exemplary embodiment, extend to propagate the optical pulses 6 to another device on or external to the integrated photonic circuit and/or on or external to the supporting substrate 11.

In the exemplary embodiment illustrated in Figure 1A, the outputted optical pulse 6 is provided to an optical fiber 19. In the exemplary embodiment illustrated in Figure 1A, the optical fiber 19 is also used to provide the pump light to optical waveguide 5 vis the first and/or second reflectors 3A, 3B.

In certain example embodiments, the first reflector 3A comprises or is formed by a first waveguide Bragg grating WBG, and/or the second reflector 3B comprises or is formed by a second waveguide Bragg grating.

The waveguide Bragg grating may, for example, be or comprise a distributed Bragg reflector (DBR) configuration, a distributed feedback (DFB), a phase-shifted DFB, or an apodized DFB configuration (for example, comprise an apodized grating) that assure the reflection profile of the first and second wavelength bands WB1, WB2, the offset WO, and permit to transmit at the pump wavelength to permit excitation of the gain medium of the waveguide 5. The waveguide Bragg grating may, for example, comprise a chirped grating, or tapered grating.

The optical waveguide 5 extends, for example, between the first and second waveguide Bragg gratings and forms the optical cavity 7 between the first and second waveguide Bragg gratings.

The first and second waveguide Bragg gratings are, for example, spectrally offset waveguide Bragg gratings. They are, for example, spectrally offset waveguide Bragg gratings configured to supress continuous-wave lasing in the cavity 7.

The first waveguide Bragg 3A grating is, for example, configured to have a central wavelength WC1 or a reflection band or range having a central wavelength WC1 that is offset from that of the second waveguide Bragg grating 3B.

The first waveguide Bragg grating 3A is, for example, configured to filter light that undergoes amplification in the optical cavity 7 and spectral broadening while propagating in the waveguide 5, and the second waveguide Bragg grating 3B is configured to filter the light that undergoes amplification in the optical cavity 7 and spectral broadening while propagating in the waveguide 5. The optical cavity 7 is configured to nonlinearly broaden the light to establish steady pulsing in the optical cavity 7.

The waveguide 5 and the first and second waveguide Bragg gratings 3A, 3B are arranged to nonlinear broaden and alternatively spectrally filter to provide an effective saturable absorber that enables mode-locking.

The first reflector 3A may be or comprise an apodized waveguide Bragg grating WBG1 configured to provide a pass-band reflection for circulating optical pulses 8 within the optical cavity 7 while transmitting light at the optical pump light wavelength, and/or the second reflector 3B may be or comprise an apodized waveguide Bragg grating WBG2 configured to provide a pass-band reflection for circulating optical pulses 8 within the optical cavity 7 while transmitting light at the optical pump light wavelength.

The first waveguide Bragg grating is, for example, an apodized waveguide Bragg grating configured to provide narrow-band reflection for circulating pulses while transmitting light at the pump light wavelength, and/or the second waveguide Bragg grating is, for example, an apodized waveguide Bragg grating configured to provide narrow-band reflection for circulating pulses while transmitting light at the pump light wavelength.

The apodized waveguide Bragg grating permits a reduction in chromatic dispersion and cladding mode scattering loss at the pump wavelength, while maintaining sufficiently high reflectivity.

In various embodiments, the laser or laser device 1 may include, for example, at least one, or at least first and second pump lasers 27 also supported by the photonic integrated circuit supporting substrate 11. The pump laser (or lasers) is, for example, an on-chip integrated device included on the same photonic chip as the laser 1.

In an exemplary embodiment, the pump laser(s) is arranged on the photonic integrated circuit supporting substrate 11 to provide and/or couple optical pump light to the optical cavity 7 and/or at least one of the first and second reflectors 3A, 3B.

In an embodiment, the laser or laser device 1 may include, for example, at least one dispersion compensation device 21 or photonic integrated circuit dispersion compensation device 21 also supported by the photonic integrated circuit supporting substrate 11. The dispersion compensation device 21 is configured to dispersion compensate the mode-locked laser pulses 6 to temporally compress the mode-locked laser pulse 6. The dispersion compensation device 21 is, for example, an on-chip integrated device included on the same photonic chip as the laser 1.

In an exemplary embodiment, the photonic integrated circuit dispersion compensation device 21 is arranged on the photonic integrated circuit supporting substrate 11 to receive the generated mode-locked laser pulses 6 from the optical cavity 7 and/or at least one of the first and second reflectors 3A, 3B.

In an exemplary embodiment, the dispersion compensation device 21 may comprise an optical filter or a programmable optical filter. In another exemplary embodiment, the dispersion compensation device may comprise at least one optical fiber or at least one optical waveguide, or a section of an optical fiber or an optical waveguide. In another exemplary embodiment, the dispersion compensation device 21 may comprise at least one chirped Bragg grating included in an optical waveguide or in a section of the optical waveguide 5 that extends from the first and/or second reflectors 3A, 3B.

In certain embodiments, the dispersion compensation device 21 is an off-chip device and included as part as an optical system that also includes the laser 1.

In various embodiments, the laser or laser device 1 may include, for example, at least one photonic integrated circuit supercontinuum generator device 23 supported by the at least one photonic integrated circuit supporting substrate 11. This, for example, forms a supercontinuum generator apparatus. The supercontinuum generator device 23 is, for example, an on-chip integrated device included on the same photonic chip as the laser 1. The supercontinuum generator device 23 is configured to generate a supercontinuum from received mode-locked laser pulses 6.

The laser or laser device 1 and the at least one photonic integrated circuit supercontinuum generator device 23 supported by the at least one photonic integrated circuit supporting substrate 11 form, for example, a photonic integrated circuit optical frequency comb generator, or a photonic chip optical frequency comb generator, or a chipscale optical frequency comb generator. The fully integrated chip-scale frequency comb generator provides or generates fully integrated chip-scale frequency combs. As seen in Figure 6D, the photonic integrated circuit optical frequency comb generator is configured to generate an octave spanning optical spectrum. A monolithic-chip octave spanning comb generator with an octave spanning comb having detectable line spacing is provided.

In an exemplary embodiment, the supercontinuum generator device 23 is arranged on the photonic integrated circuit supporting substrate 11 to receive the mode-locked laser pulses 6 from the optical cavity 7 and/or at least one of the first and second reflectors 3A, 3B.

In an embodiment, the laser or laser device 1 may include, for example, the dispersion compensation device 21 and the photonic integrated circuit supercontinuum generator device 23 both arranged on the photonic integrated circuit supporting substrate 11. The dispersion compensation device 21 is arranged on the photonic integrated circuit supporting substrate 11 to receive the generated mode-locked laser pulses 6 from the optical cavity 7 and/or at least one of the first and second reflectors 3A, 3B. The supercontinuum generator device 23 is, for example, arranged on the photonic integrated circuit supporting substrate 11 to receive the temporally compressed mode-locked laser pulses from the dispersion compensation device 21 and is configured to generate a supercontinuum from the received temporally compressed mode-locked laser pulses.

In an exemplary embodiment, the dispersion compensation device 21 may comprise at least one optical waveguide or nonlinear optical waveguide, for example, a silicon nitride optical waveguide. The silicon nitride optical waveguide can, for example, be non-doped or non-rare earth ion doped and non-configured to provide amplification.

In certain embodiments, the supercontinuum generator device 23 is an off-chip device and included as part as an optical system that also includes the laser 1, for example, forming a supercontinuum generator system.

In certain embodiments, optical pulse initiation or mode-locking commencement in the optical cavity 7, the optical waveguide 5 and the laser device 1 comprises the provision or coupling of at least one or a plurality of seed optical pulses to the optical waveguide 5 and the optical cavity 7 of the laser 1 by at least one seed generator or seed generation device 25 that is a source of optical pulses.

The injected seed pulse evolves, for example, into an optical pulse in the cavity 7 and to an outputted mode-locked pulse 6.

The seed generator or seed generation device 25 is, for example, configured to generate seed pulses having a wavelength within the spectrum of the gain medium of the optical waveguide 5, and/or be a short or ultrashort pulse, for example, having a time duration of at least 1 picosecond or less than 1 picosecond, and/or provide a high pulse energy of, for example, >1 pJ.

The seed optical pulse(s) can, for example, be provided, coupled or injected in any suitable manner, for example, through the first and/or second reflector 3A, 3B. The pulse output ports 17A, 17B can, for example, also be seed pulse input ports used to inject or provide seed pulses to the optical waveguide 5 and the optical cavity 7 via the first and/or second reflectors 3A, 3B (see, for example, Figure 18). The first and/or second reflector 3A, 3B are, for example, configured to transmit the injected seed optical pulse through the first and/or second reflector 3A, 3B and to the optical waveguide 5 and the optical cavity 7.

In certain exemplary embodiments, the seed generator or seed generation device 25 is an integrated or photonic integrated circuit or chip seed generator or seed generation device 25 that is arranged on the photonic integrated circuit supporting substrate 11 to provide or couple the seed pulses to the optical cavity 7, for example, through at least one of the first and second reflectors 3A, 3B. In certain exemplary embodiments, the at least one seed pulse generator or seed pulse generation device 25 is part of an optical system that also includes at least one laser 1 of the present disclosure.

In certain embodiments, the seed pulse generator or seed pulse generation device 25 may comprise at least one mode-locked laser, or at least one mode-locked laser and a waveguide amplifier. In certain embodiments, the seed pulse generator or seed pulse generation device 25 may comprise at least one extended optical cavity Q-switched device or arm including an extended optical cavity optically coupled to the optical cavity 7 and waveguide 5 through at least one of the first and second reflectors 3A, 3B and configured to generate a Q-switched optical pulse and/or provide a Q-switched optical pulse to the optical cavity 7 as a seed pulse.

Another aspect of the present disclosure concerns a method of providing or generating optical pulses or mode-locked pulses. The method may comprise providing the photonic integrated circuit mode-locked laser 1; and providing at least one or a plurality of seeding pulses to the optical cavity 7 to initiate optical pulse generation or mode-locked lasing. The seeding pulse or pulses are, for example, provided from a mode-locked laser or an extended optical cavity Q-switched device.

Further details of some exemplary embodiments of the laser and method of the present disclosure, operational details and measured data therefrom are now presented.

As one exemplary embodiment, the inventors have experimentally demonstrated a fully integrated Mamyshev oscillator fabricated on an erbium-doped silicon nitride photonic chip. The chip comprises a 45.2-cm-long silicon nitride spiral waveguide with a cross-section of 1.6 µm × 200 nm. The inventors selectively implanted erbium ions into segments of the waveguide 5 using an ion implantation process, enabling efficient optical amplification even at very high optical power. The oscillator cavity 7 is defined by two spectrally offset waveguide Bragg gratings 3A, 3B, each having a bandwidth of approximately 3.7 nm and a carefully engineered spectral separation (~6.5 nm), to sustain stable mode-locking via self-phase modulation-induced nonlinear broadening. The demonstrated device 1 achieved pulse energies of approximately 161.6 pJ off-chip (227 pJ on-chip) at a repetition rate of 184.8 MHz, representing a significant leap in integrated laser performance compared to existing technologies.

The detailed implantation energy and fluences are 125 keV: 6.3e14 cm^-2, 253 keV: 1.08e15 cm^-2, 500 keV: 2.16e15 cm^-2. The sample is annealed at 900°C for 1 hour after implantation.

The inventors overcome the above-mentioned challenges and, according to their knowledge, demonstrate the first photonic integrated erbium doped ultrafast mode-locked laser 1, which is fully wafer scale fabricated, delivering exceptional pulse energies of 161.6 pJ (227 pJ on-chip) at a 184.8 MHz repetition rate. This advance is enabled by recently developed erbium ion-implanted low-loss silicon nitride waveguides. The pulse energy achieved represents an over 60-fold improvement compared to previously reported integrated mode-locked lasers, rivaling the performance of fiber lasers. The laser 1 employs a linear cavity Mamyshev oscillator architecture. The cavity 7 is constructed by a Si₃N₄ waveguide with partial erbium doping by ion-implantation and two spectrally offset waveguide Bragg gratings (WBGs) 3A, 3B. This design exploits self-phase modulation-induced spectral broadening of the pulses 8 within the nonlinear waveguide 5, effectively bridging the gap between Bragg gratings 3A, 3B and enabling lasing.

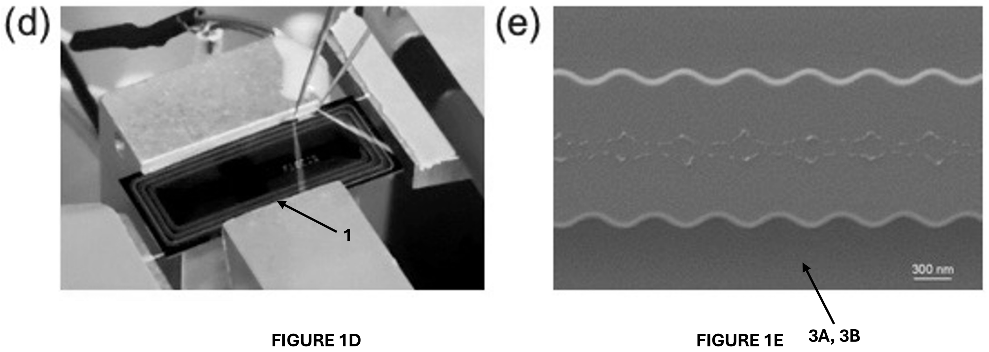

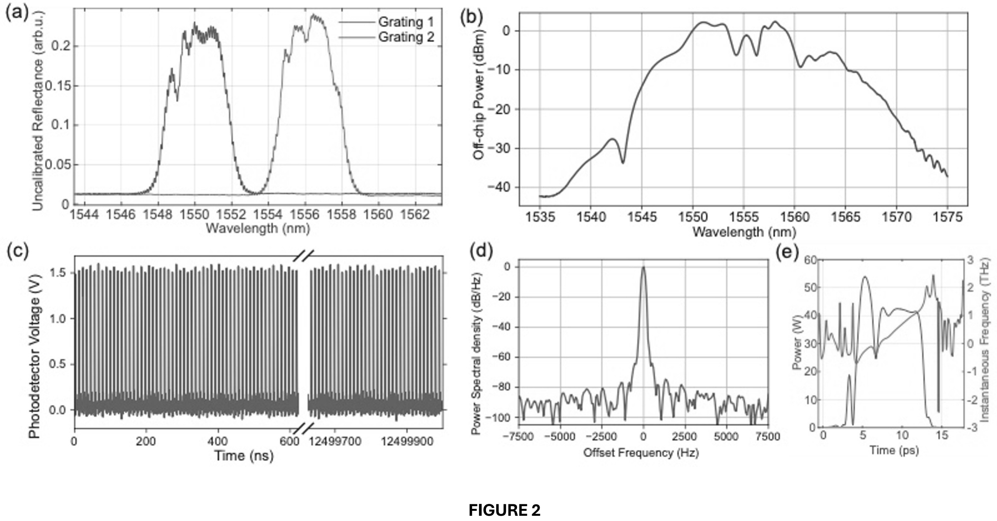

Figure 1A (dashed box) illustrates the operating principle of the integrated Mamyshev oscillator. The laser cavity 7 includes a 45.2 cm long Si3N4 waveguide 5 arranged as a spiral. To avoid mode mixing and to maximize nonlinear interactions, a single-mode waveguide cross-section of 1.6µm × 200 nm is used. At both ends of the spiral, two apodized WBGs (Figure 1E) serve as narrow-band reflectors for circulating pulses while transmitting the 1480 nm pump. Their reflection spectra exhibit a 3 dB bandwidth of approximately 3.7 nm, with central wavelengths offset by about 6.5 nm (Figure 2A). This offset can be finely tuned using integrated microheaters 15. Within the cavity 7, two segments of Si₃N₄ waveguide, each approximately 14 cm long, were selectively implanted with erbium ions at a total fluence of 3.87× 10¹⁵ cm⁻² and maximum energy of 500 keV. In the cavity 7, the light filtered by either of the gratings 3A, 3B undergoes amplification and spectral broadening while propagating in the waveguide 5, then filtered by the other of the gratings 3A, 3B and again nonlinearly broadened, establishing steady pulsing in the cavity 7. Since the two WBGs 3A, 3B are spectrally offset, continuous-wave lasing is suppressed in the cavity 7. The combined effect of nonlinear broadening and alternating spectral filtering acts as an effective saturable absorber that enables mode-locking.

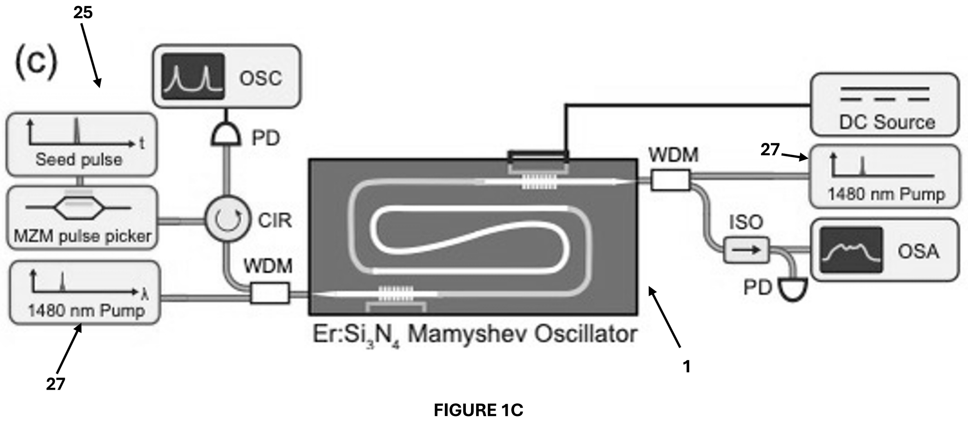

Figures 1C and 1D shows the experimental setup. The inventors seeded the integrated Mamyshev oscillator with a pulse from a mode-locked laser picked by a Mach-Zehnder modulator (MZM) to initiate the mode-locked lasing. After seeding, standalone stable mode-locking without Q-switching was observed (Figure 2C). Figure 2B shows the experimentally measured optical spectrum at one output of the device 1, which had an average power of 29.9 mW coupled to fiber, corresponding to a pulse energy of 161.6 pJ. The recorded optical spectrum had a 10 dB bandwidth of 1.6 THz, which may have experienced nonlinear broadening in the single- mode fiber (~ 10 m) in the experiment setup due to the high peak power of the generated pulses. The output from the other side had a coupled average power of 10.4 mW and a 56.2 pJ pulse energy. A portion of this output was tapped and detected using a fast photodiode connected to an oscilloscope. The inventors measured a clear RF beatnote at 184.8565 MHz with a signal-to-noise ratio exceeding 80 dB at a resolution bandwidth of 80.4 Hz (Figure 2D).

The measured pulse energy is consistent with numerical simulations, which suggest that the circulating pulses exhibit peak powers in the order of 10 Watts. The simulated pulses (Figure 2E) have widths of a few picoseconds and a linear chirp similar to fiber-based Mamyshev oscillators, making them suitable for dispersive compression. After dechirping, pulse durations shorter than one picosecond and peak powers of hundreds of watts could be achieved.

It is demonstrated for the first time a Mamyshev oscillator on a photonic integrated circuit. The generated mode-locked pulses can readily serve as a powerful source to drive various nonlinear processes on chip such as supercontinuum generation and frequency doubling on chip, providing a blueprint for realizing a radio-frequency to optical link on chip.

The laser and/or integrated circuit of the present disclosure can, for example, be fabricated using the fabrication method disclosed in International patent application WO2023/180788, the entire contents of which are fully incorporated herein by reference. The materials used for the waveguide and component elements of the laser and/or integrated circuit of the present disclosure can for example be the same as those disclosed in International patent application WO2023/180788, the entire contents of which are fully incorporated herein by reference.

Figure 3A (dashed box) also illustrates the working principle of the integrated MLL 1 based on Mamyshev oscillator. An exemplary 42-cm-long section of Er:Si₃N₄ waveguide is placed between two spectrally offset WBGs, forming a simple linear cavity with 175.5 MHz free spectral range. As simulated in Figure 3C (see also Figures 8 to 14B), pulses reflected by one grating 3A, 3B undergoes simultaneous amplification and self-phase modulation, broadening its spectrum and bridging the spectral gap between the WBGs 3A, 3B, leading to stable mode-locked lasing.

To maximize nonlinear interactions while maintaining low optical loss, the Inventors employ, in an exemaplary embodiment, a narrow few-mode Si₃N₄ waveguide 5 with a cross-section of 1.6 µm× 0.35 µm (Figure 3E). The exemplary devices 1 were fabricated using a 4-inch wafer-scale process, as detailed further below. Erbium ions were implanted into the waveguide 5 to provide optical gain, using a maximum implantation energy of 500 keV and a total fluence of 3.87 × 10¹⁵ cm⁻². This results in an estimated peak doping concentration of 0.4 atomic percent and a 22% overlap between the mode and the dopant profile (Figure 1F). The WBGs 3A, 3B, shown in Figure 1G, serve as narrowband reflectors for the pulses, while simultaneously enabling injection of an exemplary 1480 nm pump and partial transmission for output coupling.

In this embodiment, the inventors adopt an apodized grating design, using a minimized number of periods (950) to reduce both chromatic dispersion and cladding mode scattering loss at the pump wavelength, while maintaining sufficient reflectivity. The fabricated WBGs 3A, 3B exhibit 3 dB bandwidths of approximately 5 nm and a center wavelength separation WO of 8.9 nm (Figure 1H). The reflection bands are designed near 1557 nm to optimally leverage the erbium gain bandwidth. Microheaters 15 are integrated above the WBGs 3A, 3B to facilitate fine-tuning of their relative spectral positions (see for example Figure 1B). For prototyping, 26 independent MLLs 1 were implemented as parallel spiral waveguides on a 2 cm × 1.1 cm chip (Figure 1D), yielding over 300 MLLs 1 per wafer.

Figure 4A illustrates an experimental setup used to operate and characterize the integrated MLL 1 (further detailed below). For maximum output power, the MLL 1 was optically pumped from both ends of the waveguide with two unpolarized 1480 nm lasers (Pump 1 and Pump 2), delivering 959 mW and 820 mW, respectively. These power levels are readily achievable using commercially available for example single-transverse-mode indium phosphide laser diodes after polarization combining. The integrated laser was seeded with a single pulse from an external MLL in the exemplary demonstrations.

The seed pulse was filtered to limit the spectral width to 0.15 THz and gated using an electro-optic intensity modulator. Upon seeding, self-sustained mode-locking was established without continuous-wave background or Q-switching instabilities, as confirmed by the stable pulse train detected using a DC-coupled fast photodetector (see Figure 4C). It is also noted that mode-locking can also be initialized by utilizing an external reflector with, for example, a intensity modulator (see below and Figures 17 and 18). The optical spectra collected from both waveguide outputs (Figure 4F) centered at approximately 1.56 µm and showed 64 nm and 47 nm of 20 dB bandwidth, spanning the entire telecom C-band and extending into the L-band. This corresponds to over 40,000 comb lines. The Inventors measured average output powers of 136 mW (output 1) and 138 mW (output 2) from the two ends of the linear cavity, corresponding to on-chip powers of 182 mW and 184 mW after compensating for coupling loss (see below and Figures 21A and 21B), yielding a pump-to-output efficiency of 27.5%. With a repetition rate of 175.5 MHz, the pulse energies at each output were 1.04 nJ and 1.05 nJ - over two orders of magnitude higher than previous integrated ultrafast sources (see Figure 7).

For power-constrained applications, stable mode-locking was also achieved using only the 820 mW delivered by Pump 2. Under this low-power condition, the oscillator produced on-chip pulse energies of 397 pJ and 347 pJ from outputs 1 and 2, respectively, which still exceeds all prior integrated ultrafast sources by a large margin. As shown in the spectrogram (Figure 2G), the integrated MLL 1 maintained stable mode-locking for over 10 hours, demonstrating the robustness of the mode-locked state and the long-term integrity of the waveguide. A photograph of the device in operation is shown in Figure 4B.

The output pulses directly from the integrated Mamyshev oscillator are predominantly linearly chirped, and consistent with numerical simulations (see below). To characterize the pulses, the Inventors used an intensity autocorrelator in conjunction with a programmable filter that applies a quadratic spectral phase, and a home-built EDFA to compensate for loss in the filter (detaioed fuether below). Sweeping the applied dispersion, the pulse undergoes compression and re-broadening (Figure 4E), allowing identification of the optimal dispersion for pulse compression. Moreover, the phase profile of the spectrum can be estimated from the dispersion sweep data. With the optimized quadratic phase compensation, the intensity autocorrelation function of the output pulse from output 1 was compressed to 187fs full-width half maximum (Figure 4D). Alternatively, using for example a single-mode silica fiber delay line (~ 10.4 m long including other components in the setup) for dispersion compensation, the pulse from output 2 was directly compressed to a 147 fs autocorrelation width. Such dispersion compensation can be readily implemented on Si₃N₄ platform with chirped Bragg gratings.

For many applications, MLLs must exhibit low noise in terms of pulse interval and pulse-to-pulse phase slip. The inventors evaluated the coherence of the integrated Mamyshev oscillator laser 1 via direct photodetection (Figure 5A) and heterodyne beating with a reference laser (Figure 5E).

The photodetected signal exhibits tens of harmonics of repetition-rate fᵣₑₚ, extending well into the microwave range (Figure 5B). Using a low-noise amplifier and appropriate filtering, the signal-to-noise ratio (SNR) of the fundamental frep beatnote is measured to be 105 dB at 10 Hz resolution bandwidth, approaching the limit of the instrument. To estimate the timing jitter of the MLL 1, the single-sideband (SSB) phase noise power spectral density (PSD) of the sixth repetition-rate harmonic is characterized with a phase noise analyzer (PNA). After scaling down to the fundamental 175.5 MHz beatnote, the SSB phase noise at 10 kHz offset reaches 134 dBc/Hz. The integrated timing jitter between 10 kHz and 20 MHz is 69.8 fs. Moreover, by fitting the 1/f² slope to the frep phase noise between 1 kHz and 50 kHz offset, a Lorentzian linewidth of 0.012 mHz is extracted, which represents a four-order-of-magnitude improvement over the best reported value for heterogeneously integrated semiconductor MLLs.

The heterodyne beatnote between the MLL 1 and a continuous-wave reference laser at 1552 nm (Figure 5F) reveals a series of regularly spaced tones, indicating a stable frequency comb with a well-defined carrier-envelope offset frequency over the measurement duration.

To quantify the linewidth of individual comb lines (Figure 5G), the Inventors acquired the downconverted signal with an electronic signal analyzer (ESA) and extracted its frequency noise SSB power spectral density (Figure 5H). By fitting the noise floor at > 100 kHz offset, a Lorentzian linewidth of 31.4 kHz was determined. Spurs observed between 10 kHz to 100 kHz are likely caused by the intensity noise of the 1480 nm pump laser, while the bump between 1 MHz to 10 MHz may be attributed to relaxation oscillation. The frequency noise between 1 kHz and 100 kHz offset stayed below 5 × 10⁴ Hz²/Hz, which is attributed to the cavity's large mode volume and resulting low thermorefractive noise.

A compelling application of high-energy on-chip pulse sources is the realization of fully integrated, self-referenced optical frequency combs. As a proof-of-concept, the Inventors routed the integrated MLL 1 output through, for example, approximately 12.5 m of optical fiber 21 and then launched into a 4.4 cm Si₃N₄ spiral waveguide 23 on a separate chip for supercontinuum generation (Figure 6A). This fiber link 21 also provides dispersion compensation for the chirped MLL pulses, compressing them to reach kilowatt-level peak power. The Si₃N₄ spiral waveguide, fabricated using the photonic damascene process [37], features a 2.07 µm×0.70 µm cross-section (Figures 6B and 6C). It exhibits a relatively flat integrated dispersion near 1.56 µm and a dispersive wave phase matching in the near-visible wavelengths (Figure 6E). Without optical amplification, the MLL 1 output drives a 1.5-octave-spanning supercontinuum from 736 nm to 2331 nm (Fig. 6D), corresponding to a 279 THz bandwidth and is sufficient for *f*-*2f* self-referencing. The observed signal below 600 nm may result from modal-phase-matched third-harmonic generation.

The key performance metrics of the work of the prersent disclsoure were compared with state-of-the-art integrated ultrafast sources reported in the literature and shown in Tables 1A and 1B.

**TABLE 1A**

| Year | *λ*_{c} (*µ*m) | *f*ᵣₑₚ (GHz) | Pulse width (ps) | On-chip average power (mW) | *E*ₚ (pJ) | *f*ᵣₑₚ RF linewidth (Hz) | Comb line linewidth (kHz) | Spectrum width (nm) | Type | Reference |
|---|---|---|---|---|---|---|---|---|---|---|
| 2025 | 1.56 | 0.175 | 0.147" | 184 | 1052 | 1.2 × 10⁻⁵ | 31.4 | 64 (20 dB) | Er-doped-Si₃N₄ Mamyshev | This work |
| 2023 | 1.06 | 10.17 | 4.81 | 53 | 2.6 | x | 3.91 × 10³ | 0.35 (3 dB) | LN active MLL | [1] |
| 1995 | 1.60 | 3.823 | 3.8 | 0.9 | 2.4 | x | - | 0.95 (3 dB) | LN active MLL | [2] |
| 2024 | 1.55 | 39.58 | ~20 | 11 | 0.28 | x | 0.6^{v} | 20 | LN active MLL | [3] |
| 2009 | 1.56 | 0.393 | 0.44 | 1.2 | 3.05 | + | - | 8.4 (3 dB) | Er-glass WG MLL (SESAM) | [4,5] |
| 2019 | 1.90 | 1.2 | - | 9 | - | - | - | 17 (3 dB) | Tm:Al₂O₃ passive MLL | [6] |
| 2022 | 1.56 | 30.10 | 0.52 | 16.25 | 0.54 | x | x | 6 (10 dB) | EO comb (LN, time-lens) | [7] |
| 2022 | 1.55 | 30.925 | 0.336 | 20 | 0.65 | x | x | 132 (-70 dBm) | EO comb (LN, resonant) | [8] |
| 2020 | 1.56 | 9.78 | 0.098 | 0.11*^{c}* | 0.011*^{c}* | x | x | 25.8 (3 dB) | Kerr comb (SiN) | [9] |
| 2023 | 1.55 | 99.72 | ++ | ~6 | ~0.06 | x | x | - | Kerr comb (SiN) | [10] |
| 2022 | 1.55 | 143.6 | ++ | 20 | 0.14 | x | 0.5 | 200 (60 dB) | Kerr comb (hybrid SiN) | [11] |
| 2006 | 1.55 | 4.29 | 10 | 250 | 58 | - | - | 5.7 (3 dB) | III-V monolithic (SCOWL) | [12] |
| 2007 | 0.98 | 7.92 | 16 | 489 | 62 | - | - | 0.96 (3 dB) | III-V monolithic (SCOWL) | [13] |
| 2005 | 1.26 | 5.06 | 3.2 | <30 | <6 | - | - | 7.1 (3 dB) | III-V monolithic (QD) | [14] |

**TABLE 1B**

| Year | *λ*_{c} (*µ*m) | *f*ᵣₑₚ (GHz) | Pulse width (ps) | On-chip average power (mW) | *E*ₚ (pJ) | *f*ᵣₑₚ RF linewidth (Hz) | Comb line linewidth (kHz) | Spectrum width (nm) | Type | Reference |
|---|---|---|---|---|---|---|---|---|---|---|
| 2011 | 1.51 | 10.0 | 6 | 0.8*^{o}* | 0.08*^{o}* | 1 × 10^{2*e*} | - | 1.5 | III-V monolithic (QD) | [15] |
| 2005 | 1.26 | 21.0 | 0.39 | 25 | 0.95 | - | - | 20 | III-V monolithic (QD) | [16] |
| 2008 | 1.54 | 92.0 | 0.312 | 8.6 | 0.09 | - | - | 11.62 (3 dB) | III-V monolithic (QD) | 17] |
| 2012 | 1.26 | 10.0 | 2.2 | 288 | 28.7 | - | - | 5.6 (3 dB) | III-V monolithic (Tapered) | 18] |
| 2025 | 1.53 | 10.6 | 0.726 | - | - | - | - | 19.22 (20 dB) | III-V monolithic (QW) | 19] |
| 2006 | 1.53 | 15.0 | 5 | ~0.15 | 0.01 | 4 × 10⁵ | 6 × 10⁵ | 4.5 (3 dB) | III-V monolithic (Ring) | [20] |
| 2015 | 1.58 | 2.5 | 9.8 | 0.08 | 0.032 | 6.13 × 10³ | - | 3 (3 dB) | III-V monolithic (InP PIC) | [21] |
| 2017 | 1.53 | 21.5 | 0.35 | 1 | 0.047 | 4.5 × 10⁵ | - | 14 (3 dB) | III-V monolithic (InP PIC) | [22] |
| 2010 | 1.58 | 1.0 | 36 | >0.59 | 0.59 | - | 7 × 10⁴ | 5 (10 dB) | III-V monolithic (QW) | [23] |
| 2021 | 1.55 | 0.99 | 272 | - | - | 7 × 10⁴ | - | - | III-V monolithic | [24] |
| 2019 | 1.31 | 20.0 | 1.7 | 0.48 | 0.024 | 400 | - | 5.5 (3 dB) | III-V monolithic (on Si) | [25] |
| 2019 | 1.27 | 20.0 | 5 | <18 | <0.9 | 1.8 × 10³ | 10.6 × 10³ | 8.4 (10 dB) | III-V monolithic (on Si) | [26] |
| 2024 | 1.55 | 3.0 | | 2 | 0.67 | - | - | 23 (10 dB) | III-V integrated (het. SiN) | [27] |
| 2018 | 1.58 | 20.0 | 0.9 | 1.83 | 0.09 | 1.1 × 10³ | - | ~20 (20 dB) | III-V integrated (het. Si) | [28] |
| 2021 | 1.61 | 3.0 | 8 | 5.6 | 2 | 4 × 10² | < 10³ | 4 (10 dB) | III-V integrated (het. SiN) | [29] |
| 2015 | 1.56 | 4.83 | 3 | 9 | 1.86 | 1.7 × 10³ | < 2 × 10³ | 3.5 (10 dB) | III-V integrated (het. Si) | 30] |
| 2021 | 1.58 | 0.755 | 7.46 | 0.125 | 0.17 | 1 | 146 | 3.27 (10 dB) | III-V integrated (het. SiN) | [31] |
| 2017 | 1.60 | 1.0 | 7 | <0.8 | <0.8 | 9 × 10² | 2.5 × 10² | 17 (10 dB) | III-V integrated (het. Si) | 32] |
| 2021 | 1.56 | 2.18 | 6.31 | 0.4*^{o}* | 0.18 | 31 | - | 8.3 (10 dB) | III-V integrated (hyb. SiN) | 33] |
| 2023 | 1.27 | 0.1 | 5.3 | 0.042 | 0.42 | - | - | 0.4 (3 dB) | Gain-switched DFB laser | 34] |
| 2021 | 1.55 | 9.72 | | 13 | 1.34 | - | - | - | Gain-switched laser | 35] |
| 2025 | 1.55 | 0.04 | <0.3 | 30 | 750 | - | - | 20 | Fiber MLL (with amp.) | [36] |
| 2025 | 1.56 | 0.1 | 0.1 | 60 | 600 | 3 × 10^{-8p} | < 0.12^{p} | 30 | Fiber MLL (with amp.) | [37] |
| 2025 | 1.50 | 0.034 | 0.38 | 1 | 29.4 | - | - | 20 | Fiber MLL (without amp.) | [38] |
| 2025 | 1.95 | 0.05 | 0.35 | 5 | 100 | - | - | 10 | Fiber MLL (without amp.) | [39] |
| 2025 | 1.03 | 0.04 | 3 | 10 | 250 | 3 × 10^{-10e} | - | 14 | Fiber MLL (without amp.) | [40] |
| 2025 | 1.55 | 0.02 | 0.5 | 0.5 | 25 | - | - | - | Fiber MLL (without amp.) | [41] |

| | | | | | | | | | | |
|---|---|---|---|---|---|---|---|---|---|---|
| *Notes:* QD: Quantum dot; QW: Quantum well; SCOWL: Slab-coupled optical waveguide laser; SESAM: Semiconductor saturable absorber mirrors; LN:LiNbO₃; het.: heterogeneous; hyb.: hybrid. x Not applicable (for example, directly depend on the driving source). - No data provided. + No data provided, but likely good as the integrated jitter (26 fs from 10 kHz to 10 MHz) is low. ++ No data provided, but likely very short due to the solitonic nature and wide spectrum. ^{a} Autocorrelation function width after linear compression in fiber. ^{c} Estimated from the conversion efficiency. ^{p} Experimentally measured at EPFL for an older unit produced in 2016. ^{e} Estimated from figures on datasheet. ^{o} Off-chip coupled power. No coupling efficiency reported. ^{v} Average optical linewidth of each mode from delayed self-heterodyne method. | | | | | | | | | | |

For completeness, a comprehensive list of integrated ultrafast sources is presented, including some that may not strictly be considered photonic integrated circuits (PICs) by today's standards. In addition, a selection of commercially available low-power table-top mode-locked lasers (MLLs) is also listed for reference. Figure 7 compares the pulse energy Ep versus the pulse interval (1/fᵣₑₚ) of the sources listed in Tables 1A and 1B.

Similations of the integrated Mamyshev oscillator were performed and pulse propagation in the Mamyshev oscillator cavity is modeled using the generalized nonlinear Schrodinger equation (GNLSE): $\frac{\partial A}{\partial z} = - \frac{{iβ}_{2}}{2} \frac{{\partial }^{2} A}{\partial {t}^{2}} + \frac{g - α}{2} A + iγ {\left|A\right|}^{2} A ,$ (1) where *A(z,t)* is the complex envelope of the intracavity optical field, *β₂* is is the group velocity dispersion for the waveguide, γ is the waveguide Kerr nonlinear coefficient detailed later, g(z) is the position-dependent optical gain, and *α* is the linear optical loss. Propagation is performed sequentially in the forward and backward directions using the split-step Fourier method, assuming negligible nonlinear interaction between counter-propagating pulses. Accurate modeling of *g(z)* requires additional effort and the inventors adopt a first-principles static model instead of the gain model commonly used in literature. The latter assumes a fixed small-signal gain *g₀* and a constant saturation power *Pₛₐₜ,* with the gain given by $g = \frac{{g}_{0}}{1 + P / {P}_{sat}}$

In erbium-doped waveguides with sub-meter-scale lengths and high doping levels, pump power can decay significantly along the propagation direction, which makes the assumption of a constant *Pₛₐₜ* inaccurate. To address this, the inventors aimed to model the non-constant population inversion *n(z)* and gain *g(z)* for each point during the pulse and pump propagation, using the effective two-level system rate equations: $\begin{matrix}\frac{d {N}_{2}}{d t} = - \frac{{N}_{2}}{τ} + \left({N}_{1}{σ}_{12 s}-{N}_{2}{σ}_{21 s}\right) {ϕ}_{s} - \left({N}_{2}{σ}_{21 p}-{N}_{1}{σ}_{12 p}\right) {ϕ}_{p} \\ \frac{d {N}_{1}}{d t} = \frac{{N}_{2}}{τ} + \left({N}_{2}{σ}_{21 s}-{N}_{1}{σ}_{12 s}\right) {ϕ}_{s} - \left({N}_{1}{σ}_{12 p}-{N}_{2}{σ}_{21 p}\right) {ϕ}_{p}\end{matrix}$ (2)

Under the assumption that the population inversion has reached equilibrium (*dN_{1,2}*/*dt =* 0) and the inversion is uniform across the waveguide cross-section, the normalized population inversion *n(z)* = *N₂*/*N₀'* becomes $n = {N}_{2} / {N}_{0}^{′} = \frac{τ \frac{{σ}_{12 s}}{{hν}_{s}} {I}_{s} + τ \frac{{σ}_{12 p}}{{hν}_{p}} {I}_{p}}{τ \frac{{σ}_{12 s} + {σ}_{21 s}}{{hν}_{s}} {I}_{s} + τ \frac{{σ}_{12 p} + {σ}_{21 p}}{{hν}_{p}} {I}_{p} + 1}$ (3)

The resulting gain coefficient *g(z)* and pump power evolution are: $\begin{matrix}g \left(z\right) = \left(n\left(z\right)\left(1-{n}_{cluster}\right){σ}_{21 s}-\left(\left(1-n\left(z\right)\right)\left(1-{n}_{cluster}\right)+{n}_{cluster}\right){σ}_{12 s}\right) Γ \\ \frac{d {I}_{p , prop} \left(z\right)}{d z} = \left(n\left(z\right)\left(1-{n}_{cluster}\right){σ}_{21 p}-\left(\left(1-n\left(z\right)\right)\left(1-{n}_{cluster}\right)+{n}_{cluster}\right){σ}_{12 p}\right) Γ {I}_{p , prop} \left(z\right)\end{matrix}$ (4)

Definition of parameters in the equations:
- *σ*₁₂ₛ and *σ*₁₂ₚ: absorption cross sections for signal and pump.
- *σ*₂₁ₛ and *σ*₂₁ₚ: emission cross sections for signal and pump.
- *ϕ*ₛ, *ϕ*ₚ: photon fluxes for signal and pump (sum of both forward and backward propagating light).
- *I*ₛ and *I*ₚ: optical intensities of signal and pump (sum of both forward and backward propagating light).
- *α*: power loss coefficient in either forward or backward propagation, assumed to be the same for pump and signal.
- *g*: power gain coefficient for signal in either forward or backward propagation.
- *I*_{p,prop}: optical intensity of the pump in either forward (*I*_{p,fwd}) or backward (*I*_{p,bwd}) propagation.
- *τ*: spontaneous emission lifetime.
- *hv*ₛ, *hv*ₚ: photon energies of signal and pump.
- *N*₀: peak erbium ion concentration.
- Γ: overlap factor between the erbium ion distribution and optical mode intensity, normalized to the peak concentration.
- *N*₁(*z*), *N*₂(*z*): ground- and excited-state population densities (peak of the profile).
- ${N}_{0}^{′} = {N}_{1} \left(z\right) + {N}_{2} \left(z\right)$: total active erbium concentration (peak of the profile).
- ${n}_{cluster} = 1 - {N}_{0}^{′} / {N}_{0}$: fraction of erbium ions in ion clusters that cannot be excited, while still absorbing.
- *n_{g}*/*n_{A}*: correction factor of the gain in high-index-contrast waveguides

In the gain simulation, a uniform excitation ratio in the cross-section of the waveguide was assumed, which is a good approximation for high pump and signal intensity. The Invntors considered a simplified phenomenological quenching model due to the relatively high erbium doping concentration (up to 0.5 atomic percent), where some ions are considered to be in "clusters" that absorb while having negligible radiative emission efficiency. The Inventors did not include uniform up-conversion processes, as these effects were found to be negligible in the present strongly pumped system. This conclusion is based on parameters extracted from separate photoluminescence decay measurements in implanted short waveguide samples. The emission and absorption cross-sections, as well as the fraction of clustered ions, were empirically determined by fitting the model to measured amplifier gain data.

Due to the linear cavity design and bidirectional pumping, both signal and pump propagate in forward and backward directions. Their intensities modify the local population inversion, which in turn affects the gain and absorption experienced during pulse and pump propagation. Thus, forward and backward propagation and the propagation of pulse and pump are interdependent and must be solved in a self-consistent manner.

In this work, the inventors searched for steady-state solutions of the system using Algorithm 1 below, where the average powers are assumed to be time-independent and the average powers obtained from pulse propagation (accounting for gain and loss) are consistent with those used in the gain calculation. This avoids simulating the slow population dynamics (microsecond timescale) over many cavity roundtrips (nanosecond timescale), which would otherwise be computationally expensive.

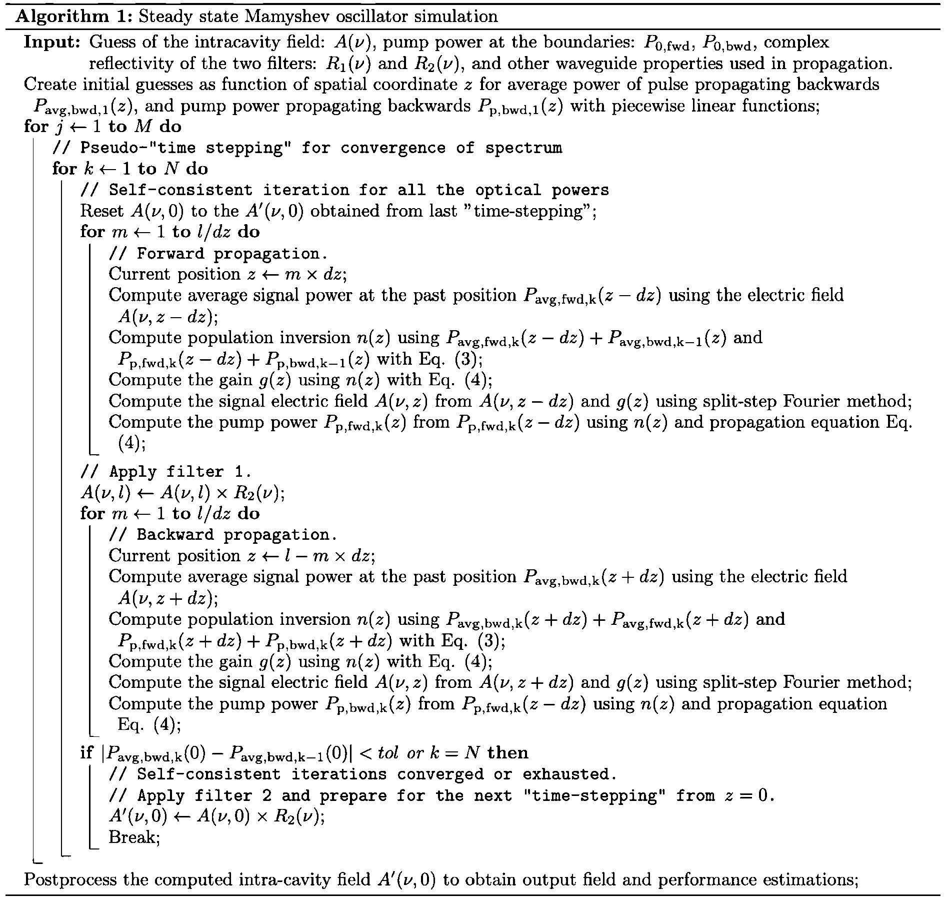

A "seed" pulse is used as the initial guess of the intracavity field, but it does not necessarily represent the actual seed pulse used to initiate the mode-locking. The "seed" is propagated in the cavity in the forwards and backwards direction consequently. At each propagation step at z, the steady-state population inversion *n= N₂*/*N₀'* is computed using equation 3 and the intensities Iₛ and Iₚ as detailed in Algorithm 1. Then *g(z)* is computed using equation (4) and proceed with the split-step stepping and the scalar propagation of the pump. The average signal and pump powers in both directions are stored as guesses for the following reversed propagation step. This bidirectional propagation loop is repeated iteratively until the forward and backward power profiles converge. Once convergence is achieved, the updated intracavity field A is used as the input for the next outer iteration ("pseudo-time step") to refine the pulse shape and spectrum. The overall process continues until a prescribed limit for the number of outer loops.

The algorithm typically converges within tens of outer iterations across most of the parameter space, either settling into a stable mode-locked state or collapsing to a trivial solution dominated by continuous-wave lasing from parasitic reflections. In some cases, the algorithm fails to converge, which is associated with chaotic pulse dynamics - consistent with occasional experimental observations of unstable or chaotic pulsing behavior under specific pump powers and grating separations.

To estimate the Kerr nonlinear coefficient γ of the Si₃N₄ waveguide 5, the following definition was used: $γ = \frac{2 π}{λ} \frac{{n}_{2}}{{A}_{eff}} ,$ (5) where λ= 1.55 µm and n₂ = 2.2 ×10⁻¹⁹ m²/W is the Kerr nonlinear index of Si₃N₄. The nonlinear contribution from the SiO₂ cladding is neglected due to the significantly lower *n₂* in SiO₂ and the confinement of the optical mode.

*A_{eff}* is the effective mode area of the waveguide, which can be calculated based on a fully vectorial model: ${A}_{eff} = \frac{{μ}_{0}}{{ε}_{0}} \frac{3 {\left|{\int }_{∞} \left(E\times H*\right)⋅dS\right|}^{2}}{{n}_{SiN}^{2} {\int }_{SiN} \left[2{\left|E\right|}^{4}+{\left|{E}^{2}\right|}^{2}\right] d S} ,$ (6) where **E** and **H** are the electric and magnetic fields derived from finite element simulation with COMSOL, *n_{SiN}* is the refractive index of Si₃N₄ and *d**S*** is the vectorial surface element of the cross-section. Figure 8 shows the calculated values of the nonlinear coefficient γ for the fundamental transverse electric (TE) mode across different waveguide geometries, as this mode typically exhibits the strongest confinement and highest nonlinearity. In this work, the inventors selected a Si₃N₄ core thickness of 350 nm as a compromise between achieving high nonlinearity and ensuring compatibility with cost-effective ion implantation using air-insulated electrostatic accelerators.

Pair-induced quenching in the gain section was considered due to the relatively high erbium doping concentration (up to 0.5 atomic percent), but did not include uniform up-conversion processes, as these effects were found to be negligible in this strongly pumped system. This conclusion is based on parameters extracted from separate photoluminescence decay measurements in implanted short waveguide samples. The emission and absorption cross-sections, as well as the fraction of clustered ions, were empirically determined by fitting the model to measured amplifier gain data.

The complex reflectivity R₁(*v*) and R₂(*v*), as well as the transmissivity of the waveguide Bragg gratings (WBGs), were simulated using the transfer matrix method (TMM). The effective index modulation Δn and parasitic chirping ΔI/I were extracted from experimentally measured grating spectra fabricated during calibration runs. It is noted that the effective Δn in the gratings can be lower than predicted by either the effective index contrast or photonic bandgap simulations, even after compensating for the finite lithographic resolution. This discrepancy likely arises from the break down of the perturbative approximation for the strongly modulated gratings used here. Nevertheless, it is found that TMM provides a good approximation of the grating spectrum after using the experimentally calibrated Δn.

Mamyshev oscillator MLLs are particularly sensitive to parasitic backreflections, which can lead to undesirable continuous-wave lasing in the cavity, reduced round-trip gain, and eventually failure to reach stable mode-locking.To model facet backreflections, the inventors add a correction term to the grating reflectivity.

The typical parameters for the integrated Mamyshev MLL is listed in Table 2 below. These parameters were used to produce the pulse propagation simulation shown in Figure 3C.

**TABLE 2**

| Symbol | Variable name | Description | Value |
|---|---|---|---|
| λ*ₛ* | | Simulation center wavelength | 1550 nm |
| *λₚ* | | Pump wavelength | 1480 nm |
| *l* | 1 | Length of doped waveguide | 0.42 m |
| *n_{g}* | ng | Waveguide group refractive index | 2.0023 |
| *β*₂ | beta2 | Group-velocity dispersion | 0.715 ps²/m |
| *β*₃ | beta3 | Third-order dispersion | -1.81 × 10⁻³ ps³/m |
| γ | gamma_nl | Kerr nonlinear coefficient | 1.145 W⁻¹ m⁻¹ |
| *α* | alpha_loss | Propagation loss (from section S4) | 10 dB/m = 2.3 m⁻¹ |
| *n*_{cluster} | clusteringFrac | Fraction of clustered ions | 0.06 |
| Γ | overlap | Mode-gain overlap | 0.22 |
| *No* | N0 | Peak total erbium ion concentration | 3.68 × 10²⁶ m⁻³ |
| *Aₛ*, *Aₚ* | As, Ap | Effective mode area (signal, pump) | 1.5 × 10⁻¹² m² |
| *τ* | tau | Upper-state lifetime | 3.0 × 10⁻³ s 10⁻²⁵ |
| *σ*₁₂ₚ, *σ*₁₂ₛ | s12p, s12s | Absorption cross-sections (pump, signal) | 3.43 × m² ; 2.53 × 10⁻²⁵ m² |
| *σ*₂₁ₚ, *σ*₂₁ₛ | s21p, s21s | Emission cross-sections (pump, signal) | 5.9 × 10⁻²⁶ m² ; 4.48 × 10⁻²⁵ m² |
| Δ*λ*_{g} | delta_lambda_g | Gain bandwidth | 40 nm |
| *P*_{p,fwd} | pump_power_fwd | On-chip forward pump power | 450 mW |
| *P*_{p,bwd} | pump_power_bwd | On-chip backward pump power | 390 mW |
| Δ*λ*_{f} | filter_gap | Offset between filters | 8.9 nm |
| *R*_{parasitic} | br | Power back reflection ratio | 1.0 × 10⁻³ |
| *N* | NN | Number of grating periods | 950 |
| Δ*n* | dn | Peak to peak effective index modulation | 8.6 × 10⁻³ |
| Δ*l*/*l* | parasitic_chirping | Parasitic chirping due to index change | 1.2 × 10⁻³ |
| *σ*ₐₚₒ | apodization_sigma | Variation for grating's Gaussian apodization | 0.15 |

For reference, Grating 1 is defined as the red-shifted WBG and Grating 2 as the blue-shifted one. "Forward propagation" refers to the direction from Grating 1 to Grating 2, while "backward propagation" is from Grating 2 to Grating 1. All reported powers in the simulation correspond to on-chip values.

Figures 9A and 9B shows the simulated time-domain evolution of the pulse as it propagates through the cavity. The pulse acquires a linear chirp and broadens significantly to several picoseconds due to the strong normal group velocity dispersion (GVD) of the waveguide, which disperses the newly generated frequency components. The intracavity peak power remains within 50 W to 125 W throughout the round-trip, allowing for substantial self-phase modulation(SPM) without inducing pulse instability or damage to the waveguide.

Figures 10A to 10F shows the time-domain envelope and instantaneous frequency at various points in the cavity, including the reflected and transmitted pulses at the WBGs. The outputs also features a width of a few picoseconds and clearly exhibit a linear frequency chirp, indicating the possibility to be significantly compressed by second order dispersion compensation.

Figures 11A and 11B presents the simulated frequency-domain spectrum of the laser output along with the modeled WBG reflectance. While the details differed from the measured spectra, the simulations reproduced key features such as spectral valleys and fine oscillations on one side of the output.

Figures 12A and 12B presents the pulse after optimal second-order dispersion compensation. Sub-150 fs compressed pulses are achieved from both output directions, with peak powers in the kilowatts level.

The accumulated nonlinear phase shift during a round-trip is semi-quantitatively characterized using the B-integral: $B = \frac{2 π}{λ} \int {n}_{2} I \left(z\right) d z$

Figure 13 shows the B-integral as a function of propagation length. The maximum B-integral reaches approximately 20π per round-trip, which is well beyond the regime accessible in soliton-based mode-locking.

Figures 14A and 14B shows the simulated intracavity and dispersion compensated output peak power of the stable solution as a function of two key design parameters: the grating center wavelength offset Δλ_{f} and the cavity length I. A broad parameter space supports stable mode-locking, with WBG separations ranging from 7 nm to 20 nm and cavity lengths from 20 cm to 70 cm. However, for cavity lengths exceeding 57 cm combined with relatively large grating separations, the algorithm often fails to converge to a stable solution. These regions are suspected to correspond to chaotic states where the pulse becomes unstable-possibly due to excessive nonlinear phase accumulation within a round trip, leading to pulse breakup. A current design operates at a moderate cavity length and relatively small grating separation, well within the stable regime and have margin for fabrication errors and future development for different repetition rates.

In an exemplary sample fabrication process, erbium-doped wafers used in this study (D20602 and D20603) were fabricated starting from commercial 4-inch silicon wafers (SIEGERT WAFER GmbH) with a 10 µm thermal SiO₂ layer grown by wet oxidation. A 362 nm stoichiometric Si₃N₄ film was then deposited via low-pressure chemical vapor deposition (LPCVD). The slightly increased deposition thickness compensates for shrinkage during subsequent annealing, resulting in a final thickness close to 350 nm. The waveguide pattern was defined using deep ultraviolet (DUV) lithography (ASML PAS5500/350C, JSR M108Y, Brewer Science DUV-42P), followed by reactive ion etching (RIE) with a fluorine-based chemistry (CHF3, SF6, Ar, O₂) in a SPTS APS system. The Si₃N₄ etching recipe was optimized for vertical sidewalls. However, the dimension of isolated features shrank by approximately 55 nm on each side, which was compensated for in the design of the edge couplers and calibration of the waveguide Bragg grating parameters. After resist stripping, the backside Si₃N₄ (from double-sided LPCVD) was removed by RIE, while protecting the front side with photoresist. Megasonic cleaning was performed to remove particle contamination on the wafer after etching with front side facing down. The wafers were then annealed at 1200°C for 12 h in N₂. Removal of the backside Si₃N₄ was done prior to annealing, as the 350 nm film can have sufficient internal stress to cause plastic deformation and bowing of the wafer which could impede subsequent fabrication steps. The wafers underwent standard ultraviolet (UV) direct-write lithography (Heidelberg MLA150, 6 µm AZ 15nXT) to define the mask for ion implantation, protecting the waveguide Bragg gratings and edge couplers from damage due to implantion. Ion implantation was performed at the Ion Beam Center of HZDR using a 500 kV air-insulated implanter. Singly charged ions were extracted from an indirectly heated cathode (IHC) Bernas-type ion source with a 40 kV extraction system, and post-accelerated to energies up to 500 keV. The ions were then mass-separated according to their charge-to-mass ratio (*q*/*A*) using an analyzing magnet. The beam was guided through the line using quadrupoles and an Einzel lens.

A neutral trap was employed to prevent neutral particles from reaching the target. To ensure uniform irradiation, the ion beam was scanned over the sample at approximately 1 kHz in both the X and Y directions, with slightly offset frequencies to improve spatial homogeneity. All implantations were conducted at room temperature with a 0° incidence angle. The implantation energies and doses used for wafers D20602 and D20603 are summarized in Table 3.

**TABLE 3**

| | Implantation Energy (keV) | Dose (D20603) (cm⁻²) | Dose (D20602) (cm⁻²) |
|---|---|---|---|
| 1 | 125 | 8.40 × 10¹⁴ | 6.30 × 10¹⁴ |
| 2 | 253 | 1.41 × 10¹⁵ | 1.08 × 10¹⁵ |
| 3 | 500 | 2.84 × 10¹⁵ | 2.16 × 10¹⁵ |

After the ion implantation, the photoresist was removed by oxygen plasma. The surface was then cleaned with concentrated HCl solution to eliminate erbium oxide residue and diluted HF solution to remove resputtered material. The wafers were subsequently annealed at 900°C (D20602) or 1000°C (D20603) for 1h in N₂ to repair radiation damage to the Si₃N₄ waveguide. Approximately 6 µm of SiO₂ cladding was deposited using inductive coupled plasma chemical vapor deposition (ICPCVD) with a SiCl₄ precursor. The wafers were then annealed at 600°C for 1h in O₂ to reduce the optical loss caused by the cladding process. Metallic microheaters 15 were fabricated by sputtering about 25 nm of Ti and about 500 nm of Pt, followed by UV lithography (Heidelberg MLA150, 2 µm AZ 10nXT) and ion beam etching (Veeco IBE350). The photoresist was reflown at 135°C to reduce resputtering caused fencing during etching.

Die separation was carried out using UV lithography (Heidelberg MLA150, 10 µm AZ 15nXT), followed by standard deep RIE of the SiO₂ layer and approximately 250 µm of Si, and concluding with backside grinding to thin down the chip to around 250 µm. The finished chips were baked on a 310°C hot plate overnight to heal Si₃N₄ damage incurred from UV exposure caused by emission from intense plasma throughout the fabrication process, which can increase the optical loss of waveguides.

The current fabrication process can exhibit two known issues, both of which can be readily addressed. First, the 350 nm Si₃N₄ layer can be prone to cracking within days if not promptly exposed and etched, significantly reducing device yield. While these cracks can be small and difficult to discern even under an optical microscope before annealing, they are enough to damage the waveguides, especially after annealing-induced shrinkage of the Si₃N₄. Patterning deep trenches (2 µm wide, square grid,~3 µm deep) similar to described in into the oxide layer along the wafer edge effectively prevents such cracking and can be implemented if required. Second, the high-dose ion implantation may causes surface swelling at the top of the Si₃N₄ waveguides, and may create an overhanging structure at the edges. These edges may lead to void formation during ICPCVD deposition of the SiO₂ cladding, despite enhanced corner coverage from the optimized process. Such voids can have irregular geometry and high refractive index contrast with SiO₂, increasing waveguide scattering loss. If required, this issue can be mitigated by introducing a lateral cladding prior to ion implantation. This can be implemented via the known photonic damascene process or through LPCVD cladding deposition followed by chemical-mechanical polishing and controlled HF thinning. The dispersion-engineered Si₃N₄ samples used for the supercontinuum generation demonstration (D7803) were fabricated using the known photonic damascene process.

Characterized the total waveguide loss after ion implantation was performed using optical frequency domain reflectometry (OFDR) for D20602 samples (implanted with 3.87 ×10¹⁵ cm⁻² total dose) with approximately 1.6 µm waveguide width. Figure 15 shows the loss spectrum, which reveals a broad erbium absorption spectrum extending from approximately 1400 nm to 1600 nm. The peak absorbance reaches approximately 165 dB/m at 1533 nm, about twice that of commercial highly erbium-doped fiber (Liekki ER80-8/125). Outside the erbium absorption band, the background waveguide loss is estimated to be approximately 9.5 dB/m. This relatively low loss leads to low intra-cavity loss and efficient delivery of pump power along the erbium-doped waveguide, contributing to the high laser efficiency. Further reduction in loss is expected through fabrication improvements, particularly by eliminating voids on the sides of the waveguide.

To consider the dynamics of pulse build up, in experiments, the Inventors either use an external mode-locked laser to seed the laser or generate an energetic pulse with an extended cavity and Q-switch to initialize. Alternatively, self-starting of optical pulse generation by the laser 1 is feasible in view of several reports having demonstrated self-starting fiber Mamyshev oscillators without external seeding. It is believed that the relative difficulty in self-starting the fabricated exemplary integrated Mamyshev oscillator arises from the large disparity between the power of parasitic continuous-wave lasing and the peak power of the mode-locked pulses. To initiate mode-locking fabricated exemplary integrated Mamyshev oscillator, a high intracavity gain is required to amplify small intensity fluctuations into a viable pulse seed. However, with a typical estimated back-reflection level 10 log₁₀ R_{parasitic} ≈ -27,dB, parasitic lasing between one of the waveguide Bragg gratings (WBGs) of the fabricated laser devices and the reflection point clamps the single-pass gain to only 13.5 dB, insufficient to amplify noise to pulse-forming levels. In fiber systems, by splicing or using angled connectors, the return loss can be reduced to very low, where 50 to 60 dB is common, thus making self-starting significantly easier. In fiber systems, splicing or using angle polished connectors can reduce return loss to higher than 50 dB, making self-starting significantly easier. Nevertheless, it is noted that by using angled edge couplers and matched fiber array units, the chip facet reflectivity - currently the dominant source of back-reflection - can be significantly reduced, thus enabling easier starting of mode-locking in the integrated devices 1.

To gain insight into the pulse build-up dynamics, the laser output was recorded using a photodetector and oscilloscope during pulse initiation, either by seeding with an external mode-locked laser or by using the external cavity Q-switching method. Two distinct behaviors were observed. Figure 16A shows the temporal evolution when the laser is seeded by a short pulse from an external MLL, as described further below. In this case, similar to the reported "coherence memory" regime, the injected seed pulse directly evolves into the stable mode-locked pulse in the cavity. The pulse amplitude exhibits only a modest~20% overshoot before settling into a steady state within approximately 20 round-trips.

Alternatively, pulse initiation can be achieved using an extended cavity arm and electro-optic Q-switch. In this case, the dynamics differ significantly: mode-locked pulse trains emerge following a high-energy Q-switched pulse, as shown in Figure 16B. The Q-switched pulse lasts approximately 24 ns and carries an on-chip energy on the order of 100 nJ, coarsely estimated by integrating the pulse area (with possible significant error due to photodiode saturation), comparable to the reported values. A train of fast pulses builds up after the slow Q-switched pulse and rapidly increases in amplitude, eventually splitting into two pulses after roughly 150 ns due to excess energy. This later evolves into a single-pulse state (Figure 16C) when the population inversion decreased. Significant amplitude fluctuations are observed immediately after initialization, but they damp out quickly and nearly vanish after around 3000 round-trips (Figure 16D), leading to a low noise mode-locked state.

Basic Mode-Locking Operations were performed. The inventors used two high-power, single-mode fiber (SMF)-coupled 1480nm pump lasers in the experiment: a Connet VLSS-1480-B-800-1 (Pump 1) and a Lumibird CRFL-05-1480-OM1-8230-FA (Pump 2). The Connet laseremploys a proprietary architecture, while the Lumibird laser is a fiber Raman laser. The Lumibird laser was operated at 2 W output power and attenuated before sending to the wavelength division multiplexer (WDM). Two thin-film-filter-based WDMs (Ascentta FWDM-45-L-10-FA) were used to inject the 1480 nm pump light while simultaneously extracting the laser output in the 1550 nm band. To minimize unwanted back-reflection from the pump lasers, filter-based WDMs were selected with a "1480nm pass / 1550nm reflect" configuration, which offer better 1550 nm band isolation at the 1480 nm port compared to typical fused-fiber WDMs or the "1550nm pass / 1480nm reflect" variants. These WDMs also feature sufficiently wide passbands in the 1550 nm range to accommodate the laser output spectrum. The pump power after the WDM was calibrated using an optical power sensor (Thorlabs S145C).

To protect the laser from unwanted feedback, isolators or circulators were placed along the 1550 nm signal path to suppress back-reflections from photodetectors and other instrumentation. The integrated microheaters were powered by a DC power supply (Rigol DP832A). For many samples, stable mode-locking could be reached without using the microheaters although some required tuning to prevent parasitic continous-wave lasing. Light was coupled into and out of the chip by butt-coupling with cleaved Coherent UHNA7 fibers. To reduce facet reflections, the fiber-chip interface was covered with index-matching gel (Thorlabs G608N3), ensuring no air gap remained at the contact point that could otherwise lead to excessive back-reflection. The sample was mounted on a metal block equipped with a thermoelectric cooler (TEC), which was feedback-controlled via a thermistor for temperature stabilization. Thorlabs NanoMax flexure stages were used to position the fibers. Average output power from both outputs was monitored using Thorlabs S144C power sensors, placed after several broadband fiber directional couplers. During calibration, the wavelength-dependent insertion loss between the common port of the WDMs and the power sensors was characterized using a swept tunable laser and taken into account to ensure accurate fiber-coupled power measurement. The optical spectra from both outputs were simultaneously monitored using two optical spectrum analyzers (OSAs): a Yokogawa AQ6370D with an uncalibrated resolution of 0.2 nm (Output 1), and a HP 71451B with 1 nm resolution (Output 2).

The power spectral density (PSD) plots shown were corrected for insertion loss and normalized to a resolution bandwidth of 0.2 nm for both outputs. However, there remains significant uncertainty in the absolute power level due to the varying physical resolution bandwidths of these grating-based OSAs. The time-domain pulse traces were recorded using a DC-coupled fast photodiode (Thorlabs DET08CFC/M) and a digital oscilloscope (Keysight EXR608A) set to 50 Ω input impedance.

As mentioned previously, the laser device 1 pulse generation can be startd by seeding.To initiate mode-locking in the integrated Mamyshev oscillator, the Inventors used the experimental setup shown in Figure 17. A commercial fiber MLL (Menlo ELMO High Power) served as the seed source, delivering 51 fs full-width-half-maximum (FWHM) pulses at a 100 MHz repetition rate and approximately 100 mW average power. The pulse width was considerably shorter than required to start the integrated MLL. To avoid nonlinear broadening of the seed pulse in subsequent fiber propagation, the inventors employed a programmable optical filter (Finisar Waveshaper 4000S) to reduce the spectrum of the seed pulse using a Gaussian-shaped filter, typically with a bandwidth of 0.15 THz to 0.6 THz.

Meanwhile, a second-order dispersion of 0.4 ps/nm is also programmed to the filter to pre-compensate for dispersion in the fiber-based experiment setup. and subsequently amplified by a home-built low-nonlinearity erbium-doped fiber amplifier (EDFA), identical to the one used in the autocorrelation measurements. This compensated for filtering losses and boosted the power to approximately 20 mW. To select single pulses from the filtered and amplified pulse train, the inventors used an electro-optical Mach-Zehnder intensity modulator (EOSpace) driven by a pulse picker board from Aerodiode. The pulse picker was synchronized with the seed MLL using the trigger output from the mode-locked laser.

The minimum bandwidth of the Gaussian-filtered pulse used for seeding was 0.15 THz, corresponding to a transform-limited pulse width of ~3 ps, which is within reach of integrated III-V mode-locked lasers. The seed pulse energy delivered on chip ranged from 15 pJ to 45 pJ, which are also accessible using integrated III-V mode-locked diodes combined with on-chip erbium-doped waveguide amplifiers. It is noted that the Mamyshev oscillator is relatively tolerant to variations in seed pulse parameters, particularly when parasitic backreflections from the fiber coupling or experimental setup are minimized. During experiments, consistent initialization of mode-locking was observed even when the seed energy, filter bandwidth, or polarization state were varied significantly.

An exemplary alternative starting method is by extended cavity Q-switching. A high-energy but slower intracavity pulse can also initiate mode-locked operation. To demonstrate this, the invenors constructed an extended cavity by reflecting one output port of the device back into the waveguide, enabling active Q-switching using an external modulator. The Inventors also used a higher off-chip pump power of 2000 mW from pump and 800 mW from pump 2 during the initialization. As illustrated in Figure 18, a controllable reflection path was created using an electro-optic intensity modulator (EOSpace) in combination with a circulator (Thorlabs). The modulator was driven by a function generator (Keysight 33622A) at a repetition rate of 1 kHz, providing high transmission for approximately 200 ns per period in the extended arm of the cavity. A Q-switch pulse can build up in the main cavity and the extended arm during the on pulse, providing a pulse with sufficient energy to initialize the mode-locking. Since the intensity modulator operates on a single polarization, with the orthogonal component being blocked, the inventors empirically optimized the fiber polarization controller settings by monitoring the Q-switching behavior on an oscilloscope.

For the supercontinuum generation demonstration, the output from the WDM (including approximately 2.5 m of fiber) was routed through a series of fiber-connected components. The signal first passed through an optical isolator with a 2.18 m pigtail, followed by 2.06 m of standard single-mode fiber linking two fiber coupling stages. It then passed through a polarization controller (with 3.43 m of fiber) and finally into a 1550 nm lensed fiber (approximately 2m in length), which was used to couple the light into a second Si₃N₄ chip. A coupling loss of 2.5 dB from fiber to chip near 1550 nm is estimated. The optical isolator was included to prevent back-reflection from the lensed fiber and the input facet of the Si₃N₄ supercontinuum chip (potentially up to a few percent) which could disrupt stable mode-locking. For on-chip or monolithic implementations, the optical isolator can be omitted and the about 3.8 dB power penality from coupling loss can also be eliminated. The output from the second chip was collected using a similar 1550 nm lensed fiber (not optimized for short-wavelength coupling efficiency) and routed to two optical spectrum analyzers (Yokogawa AQ6375 and AQ6373) for spectral characterization. To eliminate potential second-order diffraction artifacts from the grating-based spectrum analyzers in the long-wavelength region (1800 nm to 2400 nm), two Thorlabs FELH1250 long-pass filters were used in a free-space fiber bench (Thorlabs) to block shorter wavelengths during acquisition in this region.

Figure 19A, 19B and 20A to 20B show time domain pulse reconstruction from dispersion sweep data. Figure 19A shows the evolution of loss during the phase retrieval process. Figure 19B shows a reconstructed pulse intensity and phase at the shortest pulse width, with dispersion value β2 = 0.0189 ps². The phase is shown only in regions where the pulse intensity is sufficiently high. Figure 20A shows measured and Figure 20B shows a reconstructed intensity autocorrelation function, shown as a function of dispersion β2 and delay. Figures 20A and 20B confirms the validity of the retrieved pulse, where the measured intensity autocorrelation is in good agreement with the computed intensity autocorrelation based on the retrieved pulse.

To couple light efficiently from fiber to the photonic integrated circuit, the inventors used edge couplers with inverse tapers designed to match the mode field with the fiber used. Here the inventors used the Coherent UHNA7 fiber that has a mode field diameter (MFD) around 3 µm near 1550 nm wavelength, spliced with a conventional SMF-28 fiber. The theoretical coupling efficiency η as a function of different taper width is shown in Figure 21A. The taper width is designed to be around 350 nm to maximize the mode-field overlap, which gives 1.45 dB fiber-to-fiber loss by the simulation. The inventors measured the coupling loss with a 2 cm dummy straight waveguide from the same wafer without ion implantation by scanning a single frequency laser. As shown in Figure 21B, the average total fiber-to-fiber loss between 1540 nm and 1570 nm is approximately 2.52 dB, corresponding to a per-facet coupling loss of 1.26 dB. This value includes contributions from waveguide propagation loss (< 0.2 dB) and splice loss between SMF and UHNA7 fibers at both ends. The splice loss, estimated at 0.62 dB, was characterized by measuring the total loss of three spliced segments (SMF-UHNA7-SMF). The weak spectral fringes (< 0.3 dB) in the measured trace are attributed to Fabry-Perot interference at the fiber-chip interfaces.

The inventors have demonstrated a fully integrated Mamyshev oscillator architecture MLL 1 based on an exemlary embodiment of erbium-doped Si₃N₄ photonic chip, capable of generating ultrafast pulses with nanojoule-level energy. The laser delivers pulses that can be compressed to 147 fs and exhibits excellent coherence compared to existing integrated MLLs. Coherence may be further enhanced by using lower-noise pump sources and optimizing cavity dispersion management. The nanojoule-level pulses make a range of on-chip nonlinear processes directly accessible. As a proof of concept, a 1.5-octave-spanning supercontinuum generation in a Si₃N₄ waveguide, without any optical amplification, was demonstrated. This supercontinuum generation stage can be seamlessly co-integrated with the MLL chip.

While the exemplary embodiments of the present disclosure demonstrate a laser devicve 1 based on silicon nitride waveguides and in the 1.55 µm band, the laser device 1 of the present disclosure is not limited to this material platform and wavelength, the phontonic circuit or chip integrated Mamyshev oscillator configuration is readily transferable to other material platforms and wavelengths.

The combination of high pulse energy, excellent coherence, and stable mode-locking demonstrated herein provides new opportunities for nonlinear integrated photonics, including mid-infrared supercontinuum sources for spectroscopy, compact terahertz systems for nondestructive testing, and fully integrated chip-scale frequency combs for optical atomic clocks.

### REFERENCES

[1] Guo, Q. et al. Ultrafast mode-locked laser in nanophotonic lithium niobate. Science 382, 708-713 (2023).
[2] Suche, H. et al. Harmonically mode-locked Ti: Er: LiNbO3 waveguide laser. Optics Letters 20, 596-598 (1995).
[3] Ling, J. et al. Electrically empowered microcomb laser. Nature Communications 15, 4192 (2024).
[4] Byun, H. et al. Integrated low-jitter 400-MHz femtosecond waveguide laser. IEEE Photonics Technology Letters 21,763-765 (2009).
[5] Pudo, D. et al. Scaling of passively mode-locked soliton erbium waveguide lasers based on slow saturable absorbers. Opt. Express 16, 19221-19231 (2008).
[6] Shtyrkova, K. et al. Integrated CMOS-compatible Q-switched mode-locked lasers at 1900 nm with an on-chip artificial saturable absorber. Optics Express 27, 3542-3556 (2019).
[7] Yu, M. et al. Integrated femtosecond pulse generator on thin-film lithium niobate. Nature 612, 252-258 (2022).
[8] Hu, Y. et al. High-efficiency and broadband on-chip electro-optic frequency comb generators. Nature Photonics 16, 679-685 (2022).
[9] Liu, J. et al. Photonic microwave generation in the X- and K-band using integrated soliton microcombs. Nature Photonics 14, 486-491 (2020).
[10] Helgason, O. B. et al. Surpassing the nonlinear conversion efficiency of soliton microcombs. Nature Photonics 17, 992-999 (2023).
[11] Dmitriev, N. Y. et al. Hybrid integrated dual-microcomb source. Physical Review Applied 18, 034068 (2022).
[12] Plant, J. J. et al. 250 mW, 1.5 µm monolithic passively mode-locked slab-coupled optical waveguide laser. Optics Letters 31, 223-225 (2006).
[13] Gopinath, J. T. et al. 980-nm monolithic passively mode-locked diode lasers with 62 pJ of pulse energy. IEEE Photonics Technology Letters 19, 937-939 (2007).
[14] Gubenko, A. et al. High-power monolithic passively modelocked quantum-dot laser. Electronics Letters 41, 1124-1125 (2005).
[15] Carpintero, G., Thompson, M., Yvind, K., Penty, R. & White, I. Comparison of the noise performance of 10 GHz repetition rate quantum-dot and quantum well monolithic mode-locked semiconductor lasers. IET optoelectronics 5, 195-201 (2011).
[16] Rafailov, E. U. et al. High-power picosecond and femtosecond pulse generation from a two-section mode-locked quantum-dot laser. Applied Physics Letters 87, 081107 (2005).
[17] Lu, Z. et al. 312-fs pulse generation from a passive C-band InAs/InP quantum dot mode-locked laser. Optics Express 16, 10835-10840 (2008).
[18] Nikitichev, D. I. et al. High peak power and sub-picosecond fourier-limited pulse generation from passively mode-locked monolithic two-section gain-guided tapered ingaas quantum-dot lasers. Laser Physics 22, 715-724 (2012).
[19] Sun, D. et al. Generation of 10-GHz ultrashort pulse and flat optical comb using a semiconductor mode-locked laser. Optics Communications 583, 131655 (2025).
[20] Barbarin, Y. et al. Characterization of a 15 GHz integrated bulk InGaAsP passively modelocked ring laser at 1.53 µm. Optics Express 14, 9716-9727 (2006).
[21] Latkowski, S. et al. Monolithically integrated 2.5 GHz extended cavity mode-locked ring laser with intracavity phase modulators. Opt. Lett. 40, 77-80 (2015).
[22] Lo, M.-C. et al. 1.8-THz-wide optical frequency comb emitted from monolithic passively mode-locked semiconductor quantum-well laser. Optics Letters 42, 3872-3875 (2017).
[23] Cheung, S. et al. 1-GHz monolithically integrated hybrid mode-locked InP laser. IEEE Photonics Technology Letters 22, 1793-1795 (2010).
[24] Alloush, M. A. et al. RF analysis of a sub-GHz InP-based 1550 nm monolithic mode-locked laser chip. IEEE Photonics Technology Letters 33, 828-831 (2021).
[25] Auth, D., Liu, S., Norman, J., Bowers, J. E. & Breuer, S. Passively mode-locked semiconductor quantum dot on silicon laser with 400 hz RF line width. Opt. Express 27, 27256-27266 (2019). URL https://opg.optica.org/oe/abstract.cfm?URI=oe-27-19-27256.
[26] Liu, S. et al. High-channel-count 20 GHz passively mode-locked quantum dot laser directly grown on Si with 4.1 Tbit/s transmission capacity. Optica 6, 128-134 (2019).
[27] Billet, M. et al. Heterogeneous tunable III-V-on-silicon-nitride mode-locked laser emitting wide optical spectra. Photon. Res. 12, A21-A27 (2024).
[28] Davenport, M. L., Liu, S. & Bowers, J. E. Integrated heterogeneous silicon/lll-V mode-locked lasers. Photon. Res. 6, 468-478 (2018).
[29] Hermans, A. et al. High-pulse-energy III-V-on-silicon-nitride mode-locked laser. APL Photonics 6, 096102 (2021).
[30] Keyvaninia, S. et al. III-V-on-silicon anti-colliding pulse-type mode-locked laser. Optics Letters 40, 3057-3060 (2015).
[31] Cuyvers, S. et al. Low noise heterogeneous III-V-on-silicon-nitride mode-locked comb laser. Laser & Photonics Reviews 15, 2000485 (2021).S21
[32] Wang, Z. et al. A III-V-on-Si ultra-dense comb laser. Light: Science & Applications 6, e16260-e16260 (2017).
[33] Vissers, E., Poelman, S., de Beeck, C. O., Gasse, K. V. & Kuyken, B. Hybrid integrated mode-locked laser diodes with a silicon nitride extended cavity. Opt. Express 29, 15013-15022 (2021).
[34] Kobayashi, M., Nakamura, T., Nakamae, H., Kim, C. & Akiyama, H. Gain-switched pulse generation of 5.3 ps from 30 GHz-modulation-bandwidth 1270 nm DFB laser diode. Opt. Lett. 48, 6344-6347 (2023).
[35] Weng, W. et al. Gain-switched semiconductor laser driven soliton microcombs. Nature communications 12, 1425 (2021).
[36] Optilab. Femtosecond Mode-Locked Laser Module - All-PM Fiber Option. https://www.optilab.com/products/femtosecond-mode-locked-laser-module-all-pm-fiber-option (2025). Accessed: 2025-06-22.
[37] Menlo Systems. ELMO Femtosecond Erbium Laser. https://www.menlosystems.com/products/femtosecond-lasers-and-amplifiers/elmo/(2025). Accessed: 2025-06-22.
[38] Kokyo, Inc. (Symphotony). FL-MLEr-Kit-PM: PM-Type Mode-Locked Er Fiber Laser Kit (1.5 µm). https://en.symphotony.com/products/ultrafast-laser-kit/fl-mler-kit-pm/ (2025). Accessed: 2025-06-22.
[39] AdValue Photonics. 2 µm Mode-Locked Fiber Seed Laser (AP-ML). https://advaluephotonics.com/products/fiber-lasers-amplifiers/picosecond-pulsed/2-%C2%B5m-mode-locked-fiber-lasers-ps-fs/2-micron-mode-locked-fiber-seed-ap-ml/ (2025). Accessed: 2025-06-22.
[40] Cycle GmbH. SONATA - 1030 nm Yb Femtosecond Laser. https://www.cyclelasers.com/femtosecond-lasers/sonata-10-40/(2025). Accessed: 2025-06-22.
[41] Calmar Laser. 1550 nm Low Jitter Fiber Femtosecond Laser Data Sheet. https://www.calmarlaser.com/docs/datasheets/benchtop/1550%20nm%20Low%20Jitter%20Fiber %20fs.pdf (2020). Accessed: 2025-06-22.
[42] Agrawal, G. (ed.) Nonlinear Fiber Optics (Fifth Edition). Optics and Photonics (Academic Press, Boston, 2013), fifth edition edn.
[43] Becker, P. C., Anders Olsson, N. & Simpson, J. R. Erbium-Doped Fiber Amplifiers. Optics and Photonics (Academic Press, San Diego, 1999).
[44] Giles, C. R. & Desurvire, E. Modeling erbium-doped fiber amplifiers. Journal of Lightwave Technology 9, 271-283 (2002).
[45] Robinson, J. T., Preston, K., Painter, O. & Lipson, M. First-principle derivation of gain in high-index-contrast waveguides. Opt. Express 16, 16659-16669 (2008). URL https://opg.optica.org/oe/abstract.cfm?URI=oe-16-21-16659.
[46] Delevaque, E., Georges, T., Monerie, M., Lamouler, P. & Bayon, J.-F. Modeling of pair-induced quenching in erbium-doped silicate fibers. IEEE Photonics Technology Letters 5, 73-75 (1993).
[47] Snoeks, E. et al. Cooperative upconversion in erbium-implanted soda-lime silicate glass optical waveguides. J. Opt. Soc. Am. B 12, 1468-1474 (1995).
[48] Gao, M. et al. Probing material absorption and optical nonlinearity of integrated photonic materials. Nature communications 13, 3323 (2022).
[49] Afshar, V. S., Monro, T. M. & de Sterke, C. M. Understanding the contribution of mode area and slow light to the effective Kerr nonlinearity of waveguides. Opt. Express 21, 18558-18571 (2013).
[50] Bjork, G. & Nilsson, O. A new exact and efficient numerical matrix theory of complicated laser structures: properties of asymmetric phase-shifted DFB lasers. Journal of Lightwave Technology 5, 140-146 (1987).
[51] Brückerhoff-Plückelmann, F., Buskasper, T., Römer, J., Krämer, L., Malik, B., McRae, L., Kürpick, L., Palitza, S., Schuck, C. and Pernice, W. (2025), General design flow for waveguide Bragg gratings. Nanophotonics, 14: 297-304. https://doi.org/10.1515/nanoph-2024-0498.
[52] Fu, W., Wright, L. G., Sidorenko, P., Backus, S. & Wise, F. W. Several new directions for ultrafast fiber lasers. Optics Express 26, 9432-9463 (2018).
[53] Liu, Z., Ziegler, Z. M., Wright, L. G. & Wise, F. W. Megawatt peak power from a Mamyshev oscillator. Optica 4, 649-654 (2017).
[54] Lumentum Operations LLC. 600 mW fiber Bragg grating stabilized 14xx nm pump modules. URL https://www.lumentum.com/en/products/600-mw-fiber-bragg-grating-stabilized-14xx-nm-pump-modules. Accessed: 2025-06-17.
[55] Riemensberger, J. et al. A photonic integrated continuous-travelling-wave parametric amplifier. Nature 612, 56-61 (2022).
[56] Rochette, M., Chen, L. R., Sun, K. & Hernandez-Cordero, J. Multiwavelength and tunable self-pulsating fiber cavity based on regenerative spm spectral broadening and filtering. IEEE Photonics Technology Letters 20, 1497-1499 (2008).
[57] Liu, Z. et al. Mamyshev oscillation self-starting mode-locked fiber laser based on a self-feedback amplifying sub-cavity. Opt. Lett. 49, 6397-6400 (2024).
[58] Wang, C., Li, X. & Zhang, S. Automated start-up and extinction dynamics of a Mamyshev oscillator based on a temperature-dependent filter. Laser & Photonics Reviews 17, 2201016 (2023).
[59] Cao, B. et al. Coherence memory and amnesia in a mode-locked Mamyshev oscillator. Optica 11, 1673-1681 (2024).
[60] Sidorenko, P., Fu, W., Wright, L. G., Olivier, M. & Wise, F. W. Self-seeded, multi-megawatt, Mamyshev oscillator. Opt. Lett. 43, 2672-2675 (2018).
[61] Singh, N. et al. Silicon photonics-based high-energy passively Q-switched laser. Nature Photonics 18, 485-491 (2024).
[62] Wu, Y. & Chiang, K. S. Mode-selective coupling between few-mode fibers and buried channel waveguides. Optics Express 24, 30108-30123 (2016).
[63] Dudley, J. M., Genty, G. & Coen, S. Supercontinuum generation in photonic crystal fiber. Reviews of modern physics 78, 1135-1184 (2006).
[64] Guo, H. et al. Mid-infrared frequency comb via coherent dispersive wave generation in silicon nitride nanophotonic waveguides. Nature Photonics 12, 330-335 (2018).
[65] Ji, X. et al. Efficient mass manufacturing of high-density, ultra-low-loss Si3N4 photonic integrated circuits. Optica 11, 1397-1407 (2024).
[66] Liu, J. et al. High-yield, wafer-scale fabrication of ultralow-loss, dispersion-engineered silicon nitride photonic circuits. Nature Communications 12, 2236 (2021).
[67] Liu, Y. et al. A photonic integrated circuit-based erbium-doped amplifier. Science 376, 1309-1313 (2022).
[68] H. A. Haus, Mode-locking of lasers, IEEE Journal of Selected Topics in Quantum Electronics 6, 1173 (2002).
[69] U. Keller, Recent developments in compact ultrafast lasers, Nature 424, 831 (2003).
[70] A. DeMaria, D. Stetser, and H. Heynau, Self modelocking of lasers with saturable absorbers, Applied Physics Letters 8, 174 (1966).
[71] U. Keller, D. Miller, G. Boyd, T. Chiu, J. Ferguson, and M. Asom, Solid-state low-loss intracavity saturable absorber for Nd:YLF lasers: an antiresonant semiconductor Fabry-Perot saturable absorber, Optics Letters 17, 505 (1992).
[72] M. Malinauskas, A.Zukauskas, S. Hasegawa,Y. Hayasaki, V. Mizeikis, R. Buividas, and S. Juodkazis, Ultrafast laser processing of materials: from science to industry, Light: Science & Applications 5, e16133 (2016).
[73] S. A. Diddams, T. Udem, J. Bergquist, E. Curtis, R. Drullinger, L. Hollberg, W. M. Itano, W. Lee, C. Oates, K. Vogel, et al., An optical clock based on a single trapped 199Hg+ ion, Science 293, 825 (2001).
[74] C. Xu and F. Wise, Recent advances in fibre lasers for nonlinear microscopy, Nature Photonics 7, 875 (2013).
[75] H. K. Soong and J. B. Malta, Femtosecond lasers in ophthalmology, American Journal of Ophthalmology 147,189 (2009).
[76] A. H. Zewail, Femtochemistry: Atomic-scale dynamics of the chemical bond, The Journal of Physical Chemistry A104, 5660 (2000).
[77] N. Picqu'e and T. W. H"ansch, Frequency comb spectroscopy, Nature Photonics 13, 146 (2019).
[78] Z. Lu, J. Liu, S. Raymond, P. Poole, P. Barrios, and D. Poitras, 312-fs pulse generation from a passive C-band InAs/InP quantum dot mode-locked laser, Optics Express 16, 10835 (2008).
[79] V. Moskalenko, S. Latkowski, S. Tahvili, T. de Vries, M. Smit, and E. Bente, Record bandwidth and sub-picosecond pulses from a monolithically integrated mode-locked quantum well ring laser, Optics Express 22, 28865 (2014).
[80] Z. Wang, K. Van Gasse, V. Moskalenko, S. Latkowski, E. Bente, B. Kuyken, and G. Roelkens, A III-V-on-Si ultra-dense comb laser, Light: Science & Applications 6,e16260 (2017).
[81] S. Liu, X. Wu, D. Jung, J. C. Norman, M. Kennedy, H. K.Tsang, A. C. Gossard, and J. E. Bowers, High-channel-count 20 GHz passively mode-locked quantum dot laser directly grown on Si with 4.1 Tbit/s transmission capacity, Optica 6, 128 (2019).
[82] A. Hermans, K. Van Gasse, J. O. Kjellman, C. Caer, T. Nakamura, Y. Inada, K. Hisada, T. Hirasawa, S. Cuyvers, S. Kumari, A. Marinins, R. Jansen, G. Roelkens, P. Soussan, X. Rottenberg, and B. Kuyken, High-pulse-energy III-V-on-silicon-nitride mode-locked laser, APL Photonics 6, 096102 (2021).
[83] S. Cuyvers, B. Haq, C. Op de Beeck, S. Poelman, A. Hermans, Z. Wang, A. Gocalinska, E. Pelucchi, B. Corbett, G. Roelkens, K. Van Gasse, and B. Kuyken, Low noise heterogeneous III-V-on-silicon-nitride mode-locked comb laser, Laser & Photonics Reviews 15, 2000485 (2021).
[84] Q. Guo, B. K. Gutierrez, R. Sekine, R. M. Gray, J. A.Williams, L. Ledezma, L. Costa, A. Roy, S. Zhou, M. Liu, et al., Ultrafast mode-locked laser in nanophotonic lithium niobate, Science 382, 708 (2023).
[85] J. Ling, Z. Gao, S. Xue, Q. Hu, M. Li, K. Zhang, U. A. Javid, R. Lopez-Rios, J. Staffa, and Q. Lin, Electrically empowered microcomb laser, Nature Communications 15, 4192 (2024).
[86] H. Byun, D. Pudo, S. Frolov, A. Hanjani, J. Shmulovich, E. P. Ippen, and F. X. Kartner, Integrated low-jitter 400-MHz femtosecond waveguide laser, IEEE Photonics Technology Letters 21, 763 (2009).
[87] V. Brasch, M. Geiselmann, T. Herr, G. Lihachev, M. H.Pfeiffer, M. L. Gorodetsky, and T. J. Kippenberg, Photonic chip-based optical frequency comb using soliton cherenkov radiation, Science 351, 357 (2016).
[88] O. B. Helgason, M. Girardi, Z. Ye, F. Lei, J. Schroder,and V. Torres-Company, Surpassing the nonlinear conversion efficiency of soliton microcombs, Nature Photonics 17, 992 (2023).
[89] Y. Hu, M. Yu, B. Buscaino, N. Sinclair, D. Zhu,R. Cheng, A. Shams-Ansari, L. Shao, M. Zhang, J. M.Kahn, et al., High-efficiency and broadband on-chip electro-optic frequency comb generators, Nature Photonics 16, 679 (2022).
[90] M. Yu, D. Barton III, R. Cheng, C. Reimer, P. Kharel, L. He, L. Shao, D. Zhu, Y. Hu, H. R. Grant, et al., Integrated femtosecond pulse generator on thin-film lithium niobate, Nature 612, 252 (2022).
[91] K. Shtyrkova, P. T. Callahan, N. Li, E. S. Magden, A. Ruocco, D. Vermeulen, F. X. K"artner, M. R.Watts, and E. P. Ippen, Integrated CMOS-compatible Q-switched mode-locked lasers at 1900nm with an on-chip artificial saturable absorber, Optics Express 27, 3542 (2019).
[92] N. Singh, J. Lorenzen, M. Sinobad, K. Wang, A. C. Liapis, H. C. Frankis, S. Haugg, H. Francis, J. Carreira, M. Geiselmann, et al., Silicon photonics-based high-energy passively Q-switched laser, Nature Photonics 18, 485 (2024).
[93] W. Fu, L. G. Wright, P. Sidorenko, S. Backus, and F. W.Wise, Several new directions for ultrafast fiber lasers, Optics Express 26, 9432 (2018).
[94] K. Regelskis, J.Zeludevicius, K. Viskontas, and G. Raciukaitis, Ytterbium-doped fiber ultrashort pulse generator based on self-phase modulation and alternating spectral filtering, Optics Letters 40, 5255 (2015).
[95] Z. Liu, Z. M. Ziegler, L. G. Wright, and F. W. Wise, Megawatt peak power from a Mamyshev oscillator, Optica 4, 649 (2017).
[96] C. Ma, A. Khanolkar, Y. Zang, and A. Chong, Ultra-broadband, few-cycle pulses directly from a Mamyshev fiber oscillator, Photonics Research 8, 65 (2019).
[97] W. Liu, R. Liao, J. Zhao, J. Cui, Y. Song, C. Wang, and M. Hu, Femtosecond Mamyshev oscillator with 10-MW-level peak power, Optica 6, 194 (2019).
[98] M. Olivier, V. Boulanger, F. Guilbert-Savary, P. Sidorenko, F. W. Wise, and M. Pich'e, Femtosecondfiber Mamyshev oscillator at 1550 nm, Optics Letters 44, 851 (2019).
[99] P. Mamyshev, All-optical data regeneration based on self-phase modulation effect, in 24th European Conference on Optical Communication. ECOC'98 (IEEE Cat. No.98TH8398), Vol. 1 (IEEE, 1998) pp. 475-476.
[100] S. Pitois, C. Finot, L. Provost, and D. J. Richardson, Generation of localized pulses from incoherent wave in optical fiber lines made of concatenated Mamyshev regenerators, Journal of the Optical Society of America B25, 1537 (2008).
[101] P. Grelu and N. Akhmediev, Dissipative solitons for mode-locked lasers, Nature photonics 6,84 (2012).
[102] X. Ji, R. Ning Wang, Y. Liu, J. Riemensberger, Z. Qiu, and T. J. Kippenberg, Efficient mass manufacturing of high-density, ultra-low-loss Si3N4 photonic integrated circuits, Optica 11, 1397 (2024).
[103] X. Ji, X. Yang, Y. Liu, Z. Qiu, G. Lihachev, S. Bianconi, J. Sun, A. Voloshin, T. Kim, J. C. Olson, et al., Full C- and L-band tunable erbium-doped integrated lasers via scalable manufacturing, arXiv preprint arXiv:2501.06936 https://doi.org/10.48550/arXiv.2501.06936 (2025).
[104] J. Liu, G. Huang, R. N. Wang, J. He, A. S. Raja, T. Liu, N. J. Engelsen, and T. J. Kippenberg, High-yield, wafer-scale fabrication of ultralow-loss, dispersion-engineered silicon nitride photonic circuits, Nature Communications 12, 2236 (2021).
[105] T. Erdogan, Fiber grating spectra, Journal of Lightwave Technology 15, 1277 (2002).
[106] J. Zhan, Y. Zhang, Y. Hu, S. Xie, S. Veilleux, and M. Dagenais, Investigation of backward cladding-mode coupling in bragg gratings implemented on a Si3N4 waveguide platform, J. Opt. Soc. Am. B 36, 3442 (2019).
[107] Lumentum Operations LLC, 600 mW fiber Bragg grating stabilized 14xx nm pump modules, https: //www.lumentum.com/en/products/600-mw-fiber-bragg-grating-stabilized-14xx-nm-pump-modules, accessed: 2025-06-17.
[108] Z. Du, C. Xiang, T. Fu, M. Chen, S. Yang, J. E. Bowers,and H. Chen, Silicon nitride chirped spiral bragg grating with large group delay, APL Photonics 5, 101302 (2020).
[109] J. Kim and Y. Song, Ultralow-noise mode-locked fiber lasers and frequency combs: principles, status, and applications, Adv. Opt. Photon. 8, 465 (2016).
[110] G. Huang, E. Lucas, J. Liu, A. S. Raja, G. Lihachev, M. L. Gorodetsky, N. J. Engelsen, and T. J. Kippenberg, Thermorefractive noise in silicon-nitride microresonators, Phys. Rev. A 99, 061801 (2019).
[111] C. Wang, X. Li, and S. Zhang, Automated start-up and extinction dynamics of a Mamyshev oscillator based on a temperature-dependent filter, Laser & Photonics Reviews 17, 2201016 (2023).
[112] M. Churaev, R. N. Wang, A. Riedhauser, V. Snigirev,T. Blesin, C. M"ohl, M. H. Anderson, A. Siddharth, Y. Popoff, U. Drechsler, et al., A heterogeneously integrated lithium niobate-on-silicon nitride photonic platform, Nature Communications 14, 3499 (2023).
[113] H. Guo, C. Herkommer, A. Billat, D. Grassani, C. Zhang, M. H. Pfeiffer, W. Weng, C.-S. Bres, and T. J. Kippenberg, Mid-infrared frequency comb via coherent dispersive wave generation in silicon nitride nanophotonic waveguides, Nature Photonics 12, 330 (2018).
[114] M. Tonouchi, Cutting-edge terahertz technology, Nature Photonics 1, 97 (2007).
[115] Butt, Muhammad Ali & Kazanskiy, N. & Khonina, Svetlana. (2022). Advances in Waveguide Bragg Grating Structures, Platforms, and Applications: An Up-to-Date Appraisal. Biosensors. 12. 497. 10.3390/bios12070497.

It is to be understood that terms such as "first", "second", or "first" or "second" may simply be used to distinguish the component from other components in question, and do not limit the components in other aspects (e.g., importance or order). Terms, such as "first", "second", and the like, may be used herein to describe various components. Each of these terminologies is not used to define an essence, order or sequence of a corresponding component but used merely to distinguish the corresponding component from other component(s). For example, a "first" component may be referred to as a "second" component, and similarly, the "second" component may be referred to as the "first" component.

It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or populations thereof.

The word "about" when used herein means the identified value plus/minus 5%.

While the invention has been disclosed with reference to certain preferred exemplary embodiments, Accordingly, it is intended that the invention not be limited to the described embodiments.

The features of any one of the above-described embodiments may be included in any other embodiment described herein.

## Claims

1. Photonic integrated circuit mode-locked laser (1) including:
a first reflector (3A),
a second reflector (3B), and
at least one waveguide (5) extending between the first and second reflectors (3A, 3B) and forming at least one optical cavity (7) between the first and second reflectors (3A, 3B), wherein the at least one waveguide (5) includes at least one rare-earth ion implanted section (5A) located between the first and second reflectors (3A, 3B) to amplify light propagating in the at least one optical cavity (7),
wherein a first waveguide Bragg grating forms or is the first reflector (3A), a second waveguide Bragg grating forms or is the second reflector (3B), and the at least one waveguide (5) extends between the first and second waveguide Bragg gratings and forms the at least one optical cavity (7) between the first and second waveguide Bragg gratings,
wherein the first and second waveguide Bragg gratings are spectrally offset waveguide Bragg gratings, and wherein the at least one optical cavity (7), the at least one waveguide (5) and the first and second waveguide Bragg gratings (3A, 3B) are arranged to nonlinear broaden and alternatively spectrally filter to provide an effective saturable absorber that enables mode-locking.

2. Laser (1) according to any one of the previous claims, wherein the first and second waveguide Bragg gratings (3A, 3B), the at least one waveguide (5) and the at least one optical cavity (7) form a Mamyshev oscillator architecture or a linear cavity Mamyshev oscillator architecture.

3. Laser (1) according to any one of the previous claims, wherein the at least one waveguide (5) includes a waveguide core comprising silicon nitride, and/or
includes a cladding layer or material supporting and/or embedding the waveguide core, the cladding layer or material comprising silicon oxide.

4. Laser (1) according to any one of the previous claims, wherein the at least one optical cavity (7) comprises or is formed by a Mamyshev oscillator architecture or a linear cavity Mamyshev oscillator architecture.

5. Laser (1) according to any one of the previous claims, wherein the at least one waveguide (5) includes the at least one rare-earth ion implanted section (5A) and at least one non-rare-earth ion implanted section (5B) located between the first and second reflectors (3A, 3B); or wherein the at least one waveguide (5) includes at least one rare-earth ion implanted section (5A) and first and second non-rare-earth ion implanted sections (5B) located between the first and second reflectors (3A, 3B), the at least one rare-earth ion implanted section (5A) being located between the first and second non-rare-earth ion implanted sections (5B).

6. Laser (1) according to any one of the previous claims, wherein the at least one optical cavity (7) comprises a silicon nitride waveguide with partial erbium doping by ion-implantation and two spectrally offset waveguide Bragg gratings (3A, 3B).

7. Laser (1) according to any one of the previous claims, wherein the laser (1) is configured to provide self-phase modulation-induced spectral broadening of pulses within the at least one waveguide (5), effectively bridging the spectral offset between Bragg gratings of the first and second waveguide Bragg gratings (3A, 3B) to enable lasing.

8. Laser (1) according to any one of the previous claims, wherein the at least one waveguide (5) is a nonlinear waveguide, and/or the at least one waveguide (5) is a single-mode waveguide.

9. Laser (1) according to any one of the previous claims, wherein the at least one waveguide (5) extends to define a spiral and/or coil arrangement, or the at least one waveguide (5) extends to define a spiral and/or coil arrangement between the first and second reflectors (3A, 3B).

10. Laser (1) according to any one of the previous claims, wherein the first waveguide Bragg grating (3A) is an apodized waveguide Bragg grating configured to provide narrow-band reflection for circulating pulses while transmitting light at a pump light wavelength, and/or the second waveguide Bragg grating (3B) is an apodized waveguide Bragg grating configured to provide narrow-band reflection for circulating pulses while transmitting light at the pump light wavelength.

11. Laser (1) according to any one of the previous claims, wherein the first waveguide Bragg grating (3A) is configured to have a central wavelength or a reflection band or range having a central wavelength that is offset from that of the second waveguide Bragg grating (3B).

12. Laser (1) according to any one of the previous claims, including at least one optical tuner (15) configured to tune the spectral offset; or including at least one optical tuner (15) configured to tune the offset wherein the optical tuner comprises at least one integrated microheater.

13. Laser (1) according to any one of the previous claims, wherein the first waveguide Bragg grating (3A) is configured to filter light that undergoes amplification in the at least one optical cavity (7) and that undergoes spectral broadening while propagating in the at least one waveguide (5), the second waveguide Bragg grating (3B) is configured to filter the light; and the at least one optical cavity (7) is configured to nonlinearly broaden the light to establish steady pulsing in the at least one optical cavity (7).

14. Laser (1) according to any one of the previous claims, wherein the first and second waveguide Bragg gratings (3A, 3B) are spectrally offset waveguide Bragg gratings configured to supress continuous-wave lasing in the at least one optical cavity (7).

15. Method of providing or generating optical mode-locked pulses comprising:
providing the laser (1) according to any one of the previous claims; and
providing a seeding pulse to the laser (1) to initiate the optical pulse generation or mode-locked lasing.
